# EUROPEAN PATENT SPECIFICATION

(11) **EP 3 340 352 B1**
(45) Date of publication and mention of the grant of the patent: **19.05.2021**
(21) Application number: 16836969.2
(22) Date of filing: 01.08.2016
(51) Int. Cl.: H01M 8/0271, C08F 290/04, C09K 3/10, H01M 8/10, H01M 8/1018, H01M 8/0284, H01M 8/0286, H01M 8/1004, C08F 10/10, C08F 8/00, C08F 2/50

(54) **PHOTOCURABLE SEALING AGENT FOR FUEL CELL, FUEL CELL, AND SEALING METHOD**
LICHTHÄRTBARES DICHTUNGSMITTEL FÜR BRENNSTOFFZELLE, BRENNSTOFFZELLE UND DICHTUNGSVERFAHREN
AGENT D'ÉTANCHÉITÉ PHOTODURCISSABLE DESTINÉ À UNE PILE À COMBUSTIBLE, PILE À COMBUSTIBLE ET PROCÉDÉ D'ÉTANCHÉIFICATION

(30) Priority: 18.08.2015 JP 2015160954
(43) Date of publication of application: 27.06.2018
(73) Proprietor: ThreeBond Co., Ltd., Tokyo 192-0398 (JP)
(72) Inventor: SOGA, Tetsunori, Hachioji-shi Tokyo 192-0398 (JP); ANAI Mao, Hachioji-shi Tokyo 192-0398 (JP)
(74) Representative: Winter, Brandl - Partnerschaft mbB
(86) International application number: PCT/JP2016/072551
(87) International publication number: WO 2017/029978

(56) References cited:
- WO-A2-03/070833
- JP-A- 2008 516 395
- JP-A- 2009 524 194
- JP-A- 2013 216 782
- US-A1- 2006 078 781
- US-A1- 2009 000 732
- US-A1- 2014 243 444

## Description

### Technical Field

The present invention relates to a photocurable sealing agent for a fuel cell which can be quickly cured by irradiation with active energy rays such as ultraviolet rays and achieves excellent adhesion to an electrolyte membrane, PP, and PEN having properties difficult to bond.

### Background Art

In recent years, fuel cells have drawn attention as new energy systems for automobiles and households. A fuel cell is a power generator that extracts electricity by chemically reacting hydrogen and oxygen. In addition, the fuel cell is a clean power generator of the next generation because the fuel cell achieves a high energy efficiency in power generation, and forms only water from the reaction of the hydrogen and the oxygen. There are four types of fuel cells, i.e., a solid polymer fuel cell, a phosphoric acid fuel cell, a molten carbonate fuel cell, and a solid oxide fuel cell. Among them, the solid polymer fuel cell achieves a high power generation efficiency even though its operation temperature is relatively low temperature (around 80°C), and therefore is expected for usages such as motive power sources for automobiles, power generators for households, small power sources for electronic equipment such as mobile phones, and power sources for emergency.

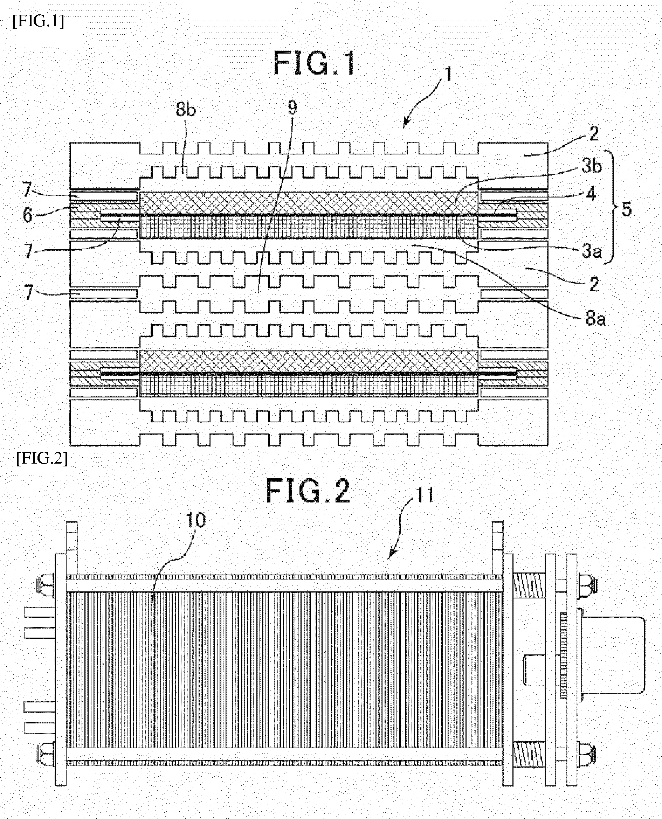

As illustrated in Fig. 1, a cell 1 of a solid polymer fuel cell has a structure including: an electrolyte membrane electrode conjugant 5 (MEA) structured such that a polymer electrolyte membrane 4 is nipped between an air electrode 3a and a fuel electrode 3b; a frame 6 that supports the MEA; and separators 2 by which gas flow paths are formed.

In order to activate the solid polymer fuel cell, it is necessary to supply a fuel gas containing hydrogen to an anode electrode and supply an oxidation gas containing oxygen to a cathode electrode in such a separated manner that these gases can be isolated from each other. This is because there is a risk of lowering the power generation efficiency if one of the gases is mixed with the other gas due to insufficiency of the isolation. Against such a background, a sealing agent is used in many portions for the purpose of preventing leakage of the fuel gas, the oxygen gas, and so on. Specifically, the sealing agent is used between adjacent separators, between a separator and a frame, between a frame and an electrolyte membrane or MEA, and so on.

As to sealing agents for use in solid polymer fuel cells, studies have been made on: a thermosetting resin composition which uses a polyisobutylene polymer and causes a hydrosilylation reaction (see JP 2004 111146 A); a thermosetting resin composition which uses a fluoropolyether compound and causes a hydrosilylation reaction (see JP 2004 075824 A1); a thermosetting resin composition which uses a fluoropolymer and causes a hydrosilylation reaction (see JP 2007 100099 A); and a thermosetting resin composition which uses an ethylene-propylene-diene rubber (see JP 2011 124258 A) as these compositions are rubber elastic bodies being excellent in gas barrier properties, heat resistance, acid resistance, and flexibility while having low moisture permeability. The thermosetting resin compositions in JP 2004 111146 A, JP 2004 075824 A1, JP 2007 100099 A and JP 2011 124258 A , however, require a heating process for curing, and therefore have problems in that a long process time is required and there is a concern over deterioration of the electrolyte membrane due to the heating.

In this regard, attention is being paid to photocurable resin compositions that can shorten the process and prevent deterioration of the electrolyte membrane due to heat. JP 2009 531516 A and JP H02 88614 A disclose photocurable sealants each containing a polyisobutylene diacrylate, a (meth)acrylic monomer, and a photoinitiator.

WO 03/070833 A2 discloses coatings comprising polymers having a polyisobutylene backbone and methacryloyl end groups; a benzophenone photoradical initiator; and isobornyl acrylate as additional monomers.

US 2014/243444 A1 discloses an active energy ray-curable composition comprising a (meth)acryloyl-terminated polyisobutylene polymer and an active energy ray polymerization initiator.

US 2009/000732 A1 discloses a fuel cell including a sealant disposed over the peripheral portions a membrane electrode assembly such that the cured sealant penetrates a gas diffusion layer of the membrane electrode assembly.

US 2006/078781 A1 discloses a subgasket disposed over one or more components of membrane electrode subassembly of a fuel cell. The subgasket comprises a layer of material that is depositable and curable in situ by irradiating, heating, and/or cooling the material.

### Summary of Invention

### Technical Problems

Nevertheless, the photocurable resin compositions disclosed in JP 2009 531516 A and JP H02 88614 A contain a polyisobutylene diacrylate as a main ingredient for the purpose of achieving sealability, but are insufficient in photocurablity. Moreover, the photocurable resin compositions disclosed in JP 2009 531516 A and JP H02 88614 A have a problem of being poor in the adhesiveness to various kinds of members because the polyisobutylene diacrylate has low polarity. Furthermore, the polymer electrolyte membrane of the fuel cell, as well as polypropylene (PP) and polyethylene naphthalate (PEN) which are representative materials for frames are materials difficult to bond. Accordingly, the photocurable resin compositions of JP 2009 531516 A and JP H02 88614 A have even more difficulty in bonding the electrolyte membrane.

Under these circumstances, there has been a demand for a photocurable sealing agent for a fuel cell that achieves both quick curing by irradiation with active energy rays such as ultraviolet rays and adhesion to an electrolyte membrane, PP, and PEN having properties difficult to bond.

### Solution to Problems

The present invention has been made in view of the foregoing circumstances, and has an object to provide a photocurable sealing agent for a fuel cell which can be quickly cured by irradiation with active energy rays such as ultraviolet rays and achieves excellent adhesion to an electrolyte membrane, PP, and PEN having properties difficult to bond.

The present invention is a photocurable sealing agent for a fuel cell containing the following (A) to (C) ingredients:
(A) ingredient: a polymer having a polyisobutylene backbone containing a -[CH2C(CH3)2]- unit, the polymer having 2 to 4 (meth)acryloyl groups per molecule;
(B) ingredient: a photo-radical polymerization initiator; and
(C) ingredient: a methacrylate monomer. The (C) ingredient is a methacrylate monomer having an alkyl group having 5 to 30 carbon atoms or a methacrylate monomer having an alicyclic group having 5 to 30 carbon atoms.

Moreover, other modes of the present invention may be as follows.
[1] A photocurable sealing agent for a fuel cell containing the following (A) to (C) ingredients:
   (A) ingredient: a polymer having a polyisobutylene backbone containing a -[CH2C(CH3)2]- unit, the polymer having 2 to 4 (meth)acryloyl groups per molecule;
   (B) ingredient: a photo-radical polymerization initiator; and
   (C) ingredient: a methacrylate monomer. The (C) ingredient is a methacrylate monomer having an alkyl group having 5 to 30 carbon atoms or a methacrylate monomer having an alicyclic group having 5 to 30 carbon atoms.
[2] The photocurable sealing agent for a fuel cell according to the [1], wherein
   the (C) ingredient is a methacrylate monomer having an alkyl group having 5 to 30 carbon atoms, and
   the methacrylate monomer having an alkyl group having 5 to 30 carbon atoms is at least one selected from the group consisting of heptyl methacrylate, 2-ethylhexyl methacrylate, octyl methacrylate, isooctyl methacrylate, decyl methacrylate, dodecyl methacrylate, isodecyl methacrylate, lauryl methacrylate, n-octadecyl methacrylate, isooctadecyl methacrylate, nonadecane methacrylate, 3-heptyldecyl-1-methacrylate, and stearyl methacrylate, or
   the (C) ingredient is a methacrylate monomer having an alicyclic group having 5 to 30 carbon atoms, and
   the methacrylate monomer having an alicyclic group is at least one selected from the group consisting of cyclohexyl methacrylate, 4-butylcyclohexyl methacrylate, dicyclopentanyl methacrylate, dicyclopentenyl methacrylate, dicyclopentenyloxy methacrylate, isobornyl methacrylate, adamantyl methacrylate, dicyclopentenyl dimethacrylate, and tricyclodecane dimethanol dimethacrylate.
[3] The photocurable sealing agent for a fuel cell according to any one of the [1] or [2], wherein a content of the (C) ingredient is 3 to 300 parts by mass relative to 100 parts by mass of the (A) ingredient.
[4] The photocurable sealing agent for a fuel cell according to any one of the [1] to [3], wherein the (A) ingredient is a polyisobutylene polymer represented by a general formula (1) : 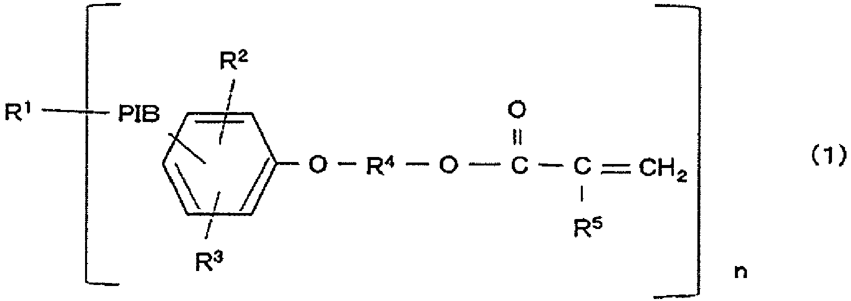 wherein R¹ represents a monovalent or polyvalent aromatic hydrocarbon group or a monovalent or polyvalent aliphatic hydrocarbon group, PIB represents the polyisobutylene backbone containing the -[CH₂C(CH₃)₂]- unit, R⁴ represents a divalent hydrocarbon group having 2 to 6 carbon atoms and optionally containing an oxygen atom, R² and R³ each independently represent a hydrogen atom or a monovalent hydrocarbon group having 1 to 20 carbon atoms, R⁵ represents a hydrogen atom, a methyl group, an ethyl group, or a propyl group, and n is any integer of 1 to 6.
[5] Use of the photocurable sealing agent for a fuel cell according to any one of the [1] to [4] as a sealing agent for a periphery of any member selected from the group consisting of a separator, a frame, an electrolyte, a fuel electrode, an air electrode, and an electrolyte membrane electrode conjugant which are members constituting a fuel cell.
[6] Use of the photocurable sealing agent for a fuel cell according to any one of the [1] to [4] as a sealing agent between adjacent separators in a fuel cell, a sealing agent between a separator and a frame in the fuel cell, or a sealing agent between a frame and an electrolyte membrane or an electrolyte membrane electrode conjugant in the fuel cell.
[7] Use of the photocurable sealing agent for a fuel cell according to the [5] or [6], wherein the fuel cell is a solid polymer fuel cell.
[8] A cured product obtained by photocuring the photocurable sealing agent for a fuel cell according to any one of the [1] to [4] .
[9] A fuel cell comprising any seal selected from the group consisting of a seal between adjacent separators in the fuel cell, a seal between a separator and a frame in the fuel cell, and a seal between a frame and an electrolyte membrane or an electrolyte membrane electrode conjugant in the fuel cell, wherein
   any one of the seals contains the cured product according to the [8].
[10] The fuel cell according to the [9], wherein the fuel cell is a solid polymer fuel cell.
[11] A method for sealing at least part of between at least two flanges of seal target components including the at least two flanges, at least one of which is a light-transmissive flange that allows active energy rays to pass therethrough, the method comprising the steps of:
   applying the photocurable sealing agent for a fuel cell according to any one of the [1] to [4] to a surface of at least one of the flanges;
   sticking the one flange with the photocurable resin composition applied thereto onto the other flange with the photocurable sealing agent for a fuel cell interposed in between; and
   sealing the at least part of between the at least two flanges by curing the photocurable sealing agent for a fuel cell by irradiation with active energy rays through the light-transmissive flange.
[12] A method for sealing at least part of between at least two flanges of seal target components including the at least two flanges, comprising the steps of:
   applying the photocurable sealing agent for a fuel cell according to any one of the [1] to [4] to at least one of the flanges;
   irradiating the applied photocurable sealing agent for a fuel cell with active energy rays to cure the photocurable sealing agent for a fuel cell, thereby forming a gasket composed of a cured product of the photocurable resin composition;
   placing the other flange on the gasket, and sealing the at least part of between the at least two flanges in such a way that the other flange and the one flange with the photocurable resin composition applied thereto are pressure bonded together with the gasket interposed in between.
[13] A method for sealing at least part of between at least two flanges of seal target components including the at least two flanges, comprising the steps of:
   placing a gasket formation mold on at least one of the flanges;
   injecting the photocurable sealing agent for a fuel cell according to any one of the [1] to [4] into at least part of a cavity formed between the gasket formation mold and the flange on which the mold is placed;
   irradiating the photocurable sealing agent for a fuel cell with the active energy rays to cure the photocurable sealing agent for a fuel cell, thereby forming a gasket composed of a cured product of the photocurable sealing agent for a fuel cell;
   detaching the mold from the one flange; and
   sealing the at least part of between the at least two flanges by placing the other flange on the gasket and then pressure bonding the one and the other flanges together with the gasket interposed in between.

The present invention has been made in view of the foregoing circumstances, and provides a photocurable sealing agent for a fuel cell which can be quickly cured by irradiation with active energy rays such as ultraviolet rays and achieves excellent adhesion to an electrolyte membrane, PP, and PEN having properties difficult to bond.

### Brief Description of Drawings

Fig. 1 is a schematic cross sectional view of a single cell of a fuel cell system.
Fig. 2 is a schematic view illustrating an entire fuel cell system.

### Description of Embodiments

Hereinafter, the present invention will be described in details.

### <(A) Ingredient>

An (A) ingredient used in the present invention is any polyisobutylene polymer, not particularly limited, having a polyisobutylene backbone containing a -[CH₂C(CH₃)₂]- unit, the polymer having 2 to 4 (meth) acryloyl groups per molecule. The (A) ingredient may be a polyisobutylene polymer which only has to contain the -[CH₂C(CH₃)₂]- unit (polyisobutylene backbone), for example, and contains a "constituent unit other than the -[CH₂C(CH₃)₂]- unit." A suitable content of -[CH₂C(CH₃)₂]-units in the (A) ingredient is, for example, 70% by mass or more, preferably 75% by mass or more, and more preferably 80% by mass or more relative to the total mass of the constituent units in the (A) ingredient. Moreover, the suitable content of -[CH₂C(CH₃)₂]- units in the (A) ingredient is, for example, 100% by mass or less, 95% by mass or less in another mode, and 90% by mass or less in still another mode. The (A) ingredient contains 2 to 4 (meth)acryloyl groups, preferably 2 to 3 (meth)acryloyl groups, and more preferably 2 (meth)acryloyl groups. It should be noted that the polymer of the present invention is not theoretically restricted but is defined as, for example, a compound having a structure in which the main chain of the polymer contains repeating units of a monomer, the compound containing 100 or more of the repeating units.

As the (A) ingredient, a polymer having a polyisobutylene backbone represented by the general formula (1) is preferable from the viewpoint that such polymer is excellent in the photocurability and the adhesion to an electrolyte membrane. A specific example of the (A) ingredient is a polyisobutylene polymer containing a (meth)acryloyloxyalkoxyphenyl group. Note that the main backbone of the (A) ingredient of the present invention is a polyisobutylene backbone. As for monomers constituting this polyisobutylene backbone, it is possible to mainly use isobutylene and additionally use another monomer (s) and to copolymerize them as long as the effects of the present invention are not impaired. Here, the (A) ingredient is preferably liquid at normal temperature (25°C) because the workability is good.

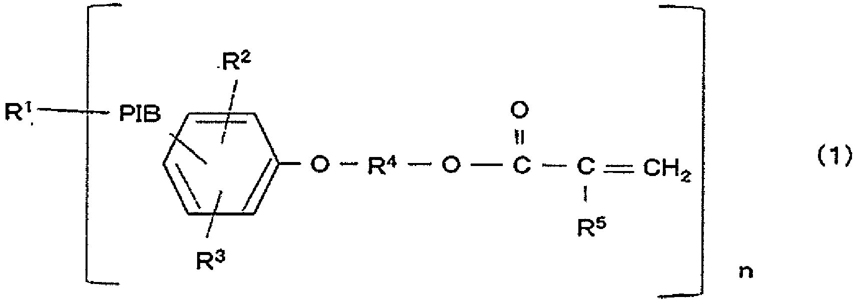

In the formula (1), R¹ represents a monovalent or polyvalent aromatic hydrocarbon group or a monovalent or polyvalent aliphatic hydrocarbon group, and is preferably a polyvalent aromatic hydrocarbon group, and particularly preferably a phenylene group. PIB represents a polyisobutylene backbone containing a -[CH₂C(CH₃)₂]- unit, which contains the -[CH₂C(CH₃)₂]- unit (or consists of the -[CH₂C(CH₃)₂]- unit). R⁴ represents a divalent hydrocarbon group having 2 to 6 carbon atoms and optionally containing an oxygen atom, and is preferably a hydrocarbon group having 2 or 3 carbon atoms. R² and R³ each independently represent a hydrogen atom or a monovalent hydrocarbon group having 1 to 20 carbon atoms, and is preferably a hydrogen atom. R⁵ represents a hydrogen atom, a methyl group, or an ethyl group, and is preferably a hydrogen atom or a methyl group. Then, n is an integer of 2 to 4.

The molecular weight of the (A) ingredient of the present invention is not particularly limited. From the viewpoints of flowability, physical properties after curing and the like, the number average molecular weight is, for example, preferably 500 to 500, 000, more preferably 1,000 to 100, 000, and particularly preferably from 3,000 to 50,000. Here, the number average molecular weight was calculated by a calculation method in terms of standard polystyrene using size-exclusion chromatography (SEC) .

The viscosity at 25°C of the (A) ingredient of the present invention is not particularly limited, but is preferably 5 to 3000 Pa·s, more preferably 50 to 2500 Pa·s, and particularly preferably 100 to 2000 Pa·s from the viewpoint of workability and the like. The viscosity is, for example, 5 Pa·s or more, preferably 50 Pa·s or more, and more preferably 100 Pa·s or more, and is, for example, 3000 Pa·s or less, preferably 2500 Pa·s or less, and more preferably 2000 Pa·s or less. A particularly preferable viscosity is 1550 Pa·s. Unless otherwise specified, the viscosity at 25°C was measured using a cone-plate type viscometer.

The viscosity at 25°C of the (A) ingredient of the present invention is not particularly limited, but is preferably 5 to 3000 Pa·s, more preferably 50 to 2500 Pa·s, and particularly preferably 100 to 2000 Pa·s from the viewpoint of workability and the like. The viscosity is, for example, 5 Pa·s or more, preferably 50 Pa·s or more, and more preferably 100 Pa·s or more, and is, for example, 3000 Pa·s or less, preferably 2500 Pa·s or less, and more preferably 2000 Pa·s or less. A particularly preferable viscosity is 1550 Pa·s. Unless otherwise specified, the viscosity at 25°C was measured using a cone-plate type viscometer.

A method for producing the (A) ingredient is not particularly limited, and any publicly known method may be used. For example, there is an obtaining method including reacting a hydroxyl-terminated polyisobutylene polymer with an acryloyl chloride or methacryloyl chloride, which are disclosed by T. P. Liao and J. P. Kennedy, Polymer Bulletin, Vol. 6, pp. 135 to 141 (1981), and Puskas et al., Polymer Bulletin, Vol. 20, pp. 253 to 260 (1988).

As other methods for producing the (A) ingredient, there are: an obtaining method including reacting a hydroxyl-terminated polyisobutylene polymer with a compound having a (meth)acryloyl group and an isocyanate group; an obtaining method including reacting a hydroxyl-terminated polyisobutylene polymer with a compound containing an isocyanate group and a compound containing a (meth)acryloyl group and a hydroxyl group; an obtaining method including reacting a hydroxyl-terminated polyisobutylene polymer with an (meth)acrylic acid or a lower ester of (meth)acrylic acid by a dehydration esterification method or an ester exchange method; and the like.

Then, a method for producing the polyisobutylene polymer represented by the general formula (1) is not particularly limited, but is preferably an obtaining method including reacting a halogen-terminated polyisobutylene polymer disclosed in JP 2013 216782 A with a compound represented by the general formula (2) and containing a (meth)acryloyl group and a phenoxy group. Moreover, the halogen-terminated polyisobutylene polymer can be obtained by any publicly known method, and is obtained, for example, by cationic polymerization, and more preferably by living cationic polymerization.

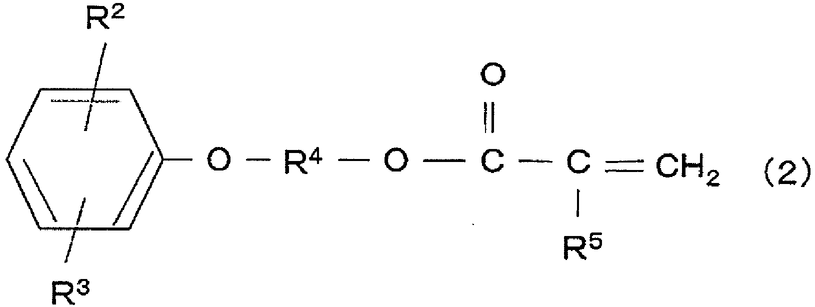

In the formula (2), R², R³, R⁴ and R⁵ may be those as defined above for the formula (1). Specifically, R⁴ represents a divalent hydrocarbon group having 2 to 6 carbon atoms and optionally containing an oxygen atom. R² and R³ each independently represent a hydrogen atom or a monovalent hydrocarbon group having 1 to 20 carbon atoms. R⁵ represents a hydrogen atom, a methyl group, or an ethyl group. As the compound represented by the above formula (2), there are, for example, phenoxymethyl acrylate, phenoxyethyl acrylate, phenoxypropyl acrylate, and the like, and a preferable one is phenoxyethyl acrylate.

### <(B) Ingredient >

A photo-radical polymerization initiator used as the (B) ingredient in the present invention may be any compound not particularly limited, as long as the compound, when irradiated with active energy rays, generates radicals or the like to cure the (A) ingredient of the present invention. Here, the active energy rays mean all types of rays in a broad sense, which include radioactive rays such as α ray and β ray, electromagnetic waves such as γ ray and X ray, electron beam (EB), ultraviolet rays of about 100 to 400 nm, visible rays of about 400 to 800 nm, and the like, and the ultraviolet rays are preferable. Examples of the (B) ingredient include an acetophenone-based photo-radical polymerization initiator, a benzoin-based photo-radical polymerization initiator, a benzophenone-based photo-radical polymerization initiator, a thioxanthone-based photo-radical polymerization initiator, an acylphosphine oxide-based photo-radical polymerization initiator, a titanocene-based photo-radical polymerization initiator, and the like. Among them, the acetophenone-based photo-radical polymerization initiator, the benzophenone-based photo-radical polymerization initiator, and the acylphosphine oxide-based photo-radical polymerization initiator are preferable from the viewpoint that a cured product excellent in curability can be obtained by irradiation with active energy rays. Any one of the initiators may be used alone, or two or more of them may be used in combination.

The acetophenone-based photo-radical polymerization initiator is not particularly limited, and examples thereof include, but are not particularly limited to, diethoxyacetophenone, 2-hydroxy-2-methyl-1-phenyl-propan-1-one, benzyl dimethyl ketal, 4-(2-hydroxyethoxy)phenyl-(2-hydroxy-2-propyl)ketone, 1-hydroxy-cyclohexyl-phenyl-ketone, 2-methyl-2-morpholino(4-thiomethylphenyl)propan-1-one, 2-benzyl-2-dimethylamino-1-(4-morpholinophenyl)butanone, 2-hydroxy-2-methyl-1-[4-(1-methylvinyl)phenyl]propanone oligomer, and the like. Commercially available products of the acetophenone-based photo-radical polymerization initiators include IRGACURE 184, IRGACUR 1173, IRGACURE 2959, and IRGACURE 127 (manufactured by BASF SE), and ESACURE KIP-150 (manufactured by Lamberti s.p.a.).

Examples of the benzophenone-based photo-radical polymerization initiator include benzophenone, 4,4'-dichlorobenzophenone, hydroxybenzophenone, 2-methylbenzophenone, 2-ethylbenzophenone, 3-methylbenzophenone, 3-ethylbenzophenone, 4-methylbenzophenone, 4-ethylbenzophenone, 3,3',4,4'-tetra(t-butylperoxycarbonyl)benzophenone, macromolecule derivatives of them, and the like.

The acylphosphine oxide-based photo-radical polymerization initiator is not particularly limited, and examples thereof include, but are not particularly limited to, bis(2,4,6-trimethylbenzoyl)-phenyl-phosphine oxide, 2,4,6-trimethylbenzoyl-diphenyl-phosphine oxide, and the like. Commercially available products of the acylphosphine oxide-based photo-radical polymerization initiator include IRGACURE TPO, IRGACURE 819, and IRGACURE 819DW (manufactured by BASF SE).

The content of the (B) ingredient of the present invention is not particularly limited, but is preferably 0.1 to 30 parts by mass, further preferably 0.5 to 20 parts by mass, and particularly preferably 1 to 15 parts by mass relative to 100 parts by mass of the (A) ingredient from the viewpoint of photocurablity.

### <(C) Ingredient>

A methacrylate monomer as the (C) ingredient of the present invention is a compound which can be polymerized by radical species generated by the (B) ingredient of the present invention. When an appropriate reactive diluent is selected as the (C) ingredient of the present invention from various kinds of reactive diluents and is combined with the other ingredients of the present invention, the (C) ingredient produces a remarkable effect of obtaining excellent adhesion to an electrolyte membrane, PP, and PEN having properties difficult to bond. As the (C) ingredient, a (meth)acrylate monomer having an alkyl group having 5 to 30 carbon atoms or a (meth) acrylate monomer having an alicyclic group having 5 to 30 carbon atoms is used, because it is miscible with the ingredient (A) and is excellent in the photocurability. In particular, the methacrylate monomer having an alicyclic group is preferable. Here, the number of carbon atoms is, 5 or more, and preferably 7 or more, and is, 30 or less, preferably 20 or less, more preferably 15 or less, and further preferably 10 or less. Any one of these compounds may be used alone, or a mixture of two or more of them may be used. Note that the (C) ingredient is an ingredient excluding the (A) ingredient of the present invention.

The methacrylate monomer having an alkyl group having 5 to 30 carbon atoms is not particularly limit, and examples thereof include heptyl methacrylate, 2-ethylhexyl methacrylate, octyl methacrylate, isooctyl methacrylate, decyl methacrylate, dodecyl methacrylate, isodecyl methacrylate, lauryl methacrylate, n-octadecyl methacrylate, isooctadecyl methacrylate, nonadecane methacrylate, 3-heptyldecyl-1-methacrylate, stearyl methacrylate, and the like. Meanwhile, as the methacrylate monomer having an alicyclic group having 5 to 30 carbon atoms, there are cyclohexyl methacrylate, 4-butylcyclohexyl methacrylate, dicyclopentanyl methacrylate, dicyclopentenyl methacrylate, dicyclopentenyloxy methacrylate, isobornyl methacrylate, adamantyl methacrylate, dicyclopentenyl dimethacrylate, tricyclodecane dimethanol dimethacrylate, and the like. As the (C) ingredient, any one of them may be used alone or a mixture of two or more of them may be used.

Commercially available products of the methacrylate monomer having an alkyl group having 5 to 30 carbon atoms include SMA (manufactured by MITSUBISHI GAS CHEMICAL COMPANY, INC.), LMA and SMA (manufactured by BASF SE), LIGHT ESTER EH, LIGHT ESTER ID, LIGHT ESTER L, LIGHT ESTER L-7, and LIGHT ESTER S (Kyoeisha Chemical Co., Ltd.), S (manufactured by Shin-Nakamura Chemical Co., Ltd.), LMA, SMA, and HMA (manufactured by Arkema), LMA and SMA (manufactured by MITSUBISHI RAYON CO., LTD.), SR242, SR313, SR324, and SR493D (manufactured by Sartomer), and the like. Meanwhile, commercially available products of the methacrylate monomer having an alicyclic group having 5 to 30 carbon atoms include FA-512M, FA-512MT, and FA-513M (manufactured by Hitachi Chemical Co., Ltd.), DCP (manufactured by Shin-Nakamura Chemical Co., Ltd.), CHMA (manufactured by BASF SE), BX-ADMA and BX-DCPMA (manufactured by Bimax Chemicals Ltd.), LIGHT ESTER IB-X (Kyoeisha Chemical Co., Ltd.), CHMA (manufactured by MITSUBISHI RAYON CO., LTD.), SR423 (manufactured by Sartomer), and the like.

The content of the (C) ingredient of the present invention is not particularly limited, but is preferably 3 to 300 parts by mass, more preferably 5 to 200 parts by mass, and particularly preferably 10 to 100 parts by mass relative to 100 parts by mass of the (A) ingredient. In this case, it is preferable that the content of the (C) ingredient be 3 parts by mass or more because the surface curability does not decrease, and be 300 parts by mass or less because the moisture permeability of a cured product of the photocurable sealing agent does not deteriorate. <Optional Ingredient>

The sealing agent of the present invention may use, as long as the object of the present invention is not impaired, additives such as acrylate monomers, oligomers having a (meth) acryloyl group (excluding the (A) ingredient and the (C) ingredient of the present invention), thermal radical initiators, polythiol compounds, tertiary amine compounds, various elastomers such as styrene-based copolymers, bulking agents, storage stabilizers, antioxidants, light stabilizers, plasticizers, pigments, flame retardants, tackifiers, and surfactants.

The acrylate monomer is not particularly limited, and examples thereof include ethyl acrylate, n-butyl acrylate, ter-butyl acrylate, isobutyl acrylate, 2-ethylhexyl acrylate, isodecyl acrylate, butoxydiethylene glycol acrylate, methoxy polyethylene glycol acrylate, glycidyl acrylate, lauryl acrylate, stearyl acrylate, tetrahydrofurfuryl acrylate, caprolactone-modified tetrahydrofurfuryl acrylate, cyclohexyl acrylate, dicyclopentanyl acrylate, dicyclopentenyl acrylate, dicyclopentenyloxy acrylate, isobornyl acrylate, adamantyl acrylate, benzyl acrylate, phenyl acrylate, phenoxyethyl acrylate, phenoxydiethylene glycol acrylate, phenoxytetraethylene glycol acrylate, nonylphenoxyethyl acrylate, butoxyethyl acrylate, 2-hydroxyethyl acrylate, 2-hydroxypropyl acrylate, 4-hydroxybutyl acrylate, glycerol acrylate, trifluoroethyl acrylate, γ-acryloxypropyltrimethoxysilane, acryloyl morpholine, morpholinoethyl acrylate, dimethylaminoethyl acrylate, diethylaminoethyl acrylate, N,N-dimethylaminoethyl acrylate, N,N-dimethylaminopropyl acrylate, 3-acryloxypropyltrimethoxysilane, ethylene glycol diacrylate, diethylene glycol diacrylate, triethylene glycol diacrylate, tetraethylene glycol diacrylate, 1,6-hexanediol diacrylate, 1,9-nonanediol diacrylate, glycerin diacrylate, neopentyl glycol diacrylate, stearic acid-modified pentaerythritol diacrylate, dicyclopentenyl diacrylate, diacryloyl isocyanurate, alkylene oxide-modified bisphenol diacrylate, trimethylolpropane triacrylate, pentaerythritol triacrylate, tris(acryloyl oxyethyl)isocyanurate, ditrimethylolpropane tetraacrylate, pentaerythritol tetraacrylate, dipentaerythritol monohydroxypentaacrylate, alkyl-modified dipentaerythritol pentaacrylate, dipentaerythritol hexaacrylate, and the like. Any of these acrylate monomers may be used alone or a mixture of two or more of them may be used.

The oligomers having a (meth)acryloyl group (excluding the (A) ingredient and the (C) ingredient of the present invention) are not particularly limited, and examples thereof include urethane(meth)acrylate having a polybutadiene backbone, urethane(meth)acrylate having a hydrogenated polybutadiene backbone, urethane(meth)acrylate having a polycarbonate backbone, urethane(meth)acrylate having a polyether backbone, urethane(meth)acrylate having a polyester backbone, urethane (meth) acrylate having a castor oil backbone, isoprene-based (meth)acrylate, hydrogenated isoprene-based (meth)acrylate, epoxy(meth)acrylate, (meth)acryl group-containing acrylic polymer, and the like. Among them, urethane(meth)acrylate having a polybutadiene backbone, urethane(meth)acrylate having a hydrogenated polybutadiene backbone, urethane (meth) acrylate having a castor oil backbone, isoprene-based (meth)acrylate, and hydrogenated isoprene-based (meth)acrylate are preferable because they are excellent in miscibility with the (A) ingredient and the (C) ingredient of the present invention.

The thermal radical initiators are not particularly limited, and examples thereof include ketone peroxide, peroxyketal, dialkyl peroxide, hydroperoxide, peroxyester, diacyl peroxide, peroxydicarbonate, and the like. Any one of these compounds may be used alone, or a mixture of two or more of them may be used.

The polythiol compounds are not particularly limited, and examples thereof include trimethylolpropane tris(3-mercaptopropionate), pentaerythritol tetrakis(3-mercaptopropionate), trimethylolpropane tris(3-mercaptobutyrate), trimethylolethane tris(3-mercaptobutyrate), trimethylolethane tris(3-mercaptobutyrate), ethyleneglycol bis(3-mercaptoglycolate), butanediol bis(3-mercaptoglycolate), trimethylolpropane tris(3-mercaptoglycolate), pentaerythritol tetrakis(3-mercaptoglycolate), tris-[(3-mercaptopropionyloxy)-ethyl]-isocyanurate, pentaerythritol tetrakis(3-mercaptopropionate), tetraethyleneglycol bis(3-mercaptopropionate), dipentaerythritol hexakis(3-mercaptopropionate), pentaerythritol tetrakis(3-mercaptobutyrate), 1,4-bis(3-mercaptobutyryloxy)butane, 1,3,5-tris(3-mercaptobutyloxyethyl)-1,3,5-triazine-2,4,6(1H ,3H,5H)-trione, and the like. Any one of these compounds may be used alone, or a mixture of two or more of them may be used.

Examples of commercially available products of the polythiol compounds include, but not particularly limited to: TMTP and PETP (manufactured by YODO KAGAKU CO., LTD.); TEMPIC, TMMP, PEMP, PEMP-II-20P, and DPMP (manufactured by SC ORGANIC CHEMICAL CO., LTD.); MTNR1, MTBD1, and MTPE1 (manufactured by SHOWA DENKO K.K.); and the like. Any one of these compounds may be used alone, or a mixture of two or more of them may be used.

In the present invention, a tertiary amine compound may be blended for the purpose of improving the photocurability. The tertiary amine compound is not particularly limited, and examples thereof include trimethylamine, triethylamine, tributylamine, N,N'-diethanolamine, N,N'-dimethyl-p-toluidine, N,N'-dimethyl-aniline, N-methyl-diethanolamine, N-methyl-dimethanolamine, N,N'-dimethylamino-acetophenone, N,N'-dimethylamino-benzophenone, N,N'-diethylamino-benzophenone, triisopropanolamine, and the like.

In the present invention, a styrene-based copolymer may be blended for the purpose of adjusting the rubber physical properties of a cured product. The styrene-based copolymer is not particularly limited, and examples thereof include styrene-isoprene copolymer (SIP), styrene-butadiene copolymer (SB), styrene-ethylene-butylene-styrene copolymer (SEBS), styrene-isobutylene-styrene copolymer (SIBS), acrylonitrile-styrene copolymer (AS), styrene-butadiene-acrylonitrile copolymer (ABS), and the like.

In the present invention, for the purpose of improving the elastic modulus of a cured product, the flowability and the like, a bulking agent may be added as long as the storage stability is not impaired. Specific bulking agents include organic powders, inorganic powders, metallic powders, and the like. Examples of the inorganic powder bulking agents include glass, fumed silica, alumina, mica, ceramics, silicone rubber powder, calcium carbonate, aluminum nitride, carbon powder, kaolin clay, dried clay mineral, dried diatomite, and the like. The content of the inorganic powder is preferably about 0.1 to 100 parts by mass relative to 100 parts by mass of the (A) ingredient. The content of 0.1 parts by mass or more is preferable because sufficient effects can be expected, whereas the content of 100 parts by mass or less is also preferable because flowability sufficient for a photocurable seating agent can be maintained and a certain level of workability can also be maintained.

The fumed silica can be blended for the purpose of adjusting the viscosity of the photocurable sealing agent for a fuel cell or improving the mechanical strength of a cured product. A preferably usable fumed silica is one obtained by hydrophobic treatment with an organochlorosilane, a polyorganosiloxane, a hexamethyldisilazane, or the like. Specific examples of the fumed silica include commercially available products manufactured by NIPPON AEROSIL CO., LTD. under the trade names of AEROSIL R974, R972, R972V, R972CF, R805, R812, R812S, R816, R8200, RY200, RX200, RY200S, R202, and the like.

Examples of the organic powder bulking agents include polyethylene, polypropylene, nylon, crosslinked acryl, crosslinked polystyrene, polyester, polyvinyl alcohol, polyvinyl butyral, and polycarbonate. The content of the organic powder is preferably about 0.1 to 100 parts by mass relative to 100 parts by mass of the (A) ingredient. The content of 0.1 parts by mass or more is preferable because sufficient effects can be expected, whereas the content of 100 parts by mass or less is also preferable because a photocurable seating agent can have sufficient flowability and workability.

Examples of the metallic powder bulking agents include gold, platinum, silver, copper, indium, palladium, nickel, alumina, tin, iron, aluminum, stainless steel, and the like. The content of the metallic powder is preferably about 0.1 to 100 parts by mass and more preferably 1 to 50 parts by mass relative to 100 parts by mass of the (A) ingredient.

In the present invention, a storage stabilizer may be added. As the storage stabilizer, it is possible to use radical absorbers such as benzoquinone, hydroquinone, and hydroquinone monomethyl ether; metal chelating agents such as ethylenediaminetetraacetic acid or 2-sodium salt thereof, oxalic acid, acetylacetone, and o-aminophenol; and the like.

In the present invention, an antioxidant may be added. Examples of the antioxidant include: quinone compounds such as β-naphthoquinone, 2-methoxy-1,4-naphthoquinone, methyl hydroquinone, hydroquinone, hydroquinone monomethyl ether, mono-tert-butyl hydroquinone, 2,5-di-tert-butyl hydroquinone, p-benzoquinone, 2,5-diphenyl-p-benzoquinone, and 2,5-di-tert-butyl-p-benzoquinone; phenols such as phenothiazine, 2,2-methylene-bis(4-methyl-6-tert-butylphenol), catechol, tert-butylcatechol, 2-butyl-4-hydroxyanisole, 2,6-di-tert-butyl-p-cresol, 2-tert-butyl-6-(3-tert-butyl-2-hydroxy-5-methylbenzyl)-4-me thylphenyl acrylate, 2-[1-(2-hydroxy-3,5-di-tert-pentylphenyl)ethyl]-4,6-di-tert -pentylphenyl acrylate, 4,4'-butylidene-bis(6-tert-butyl-3-methylphenol) , 4,4'-thio-bis(6-tert-butyl-3-methylphenol) , 3,9-bis[2-[3-(3-tert-butyl-4-hydroxy-5-methylphenyl)propion yloxy]-1,1-dimethylethy1]-2,4,8,10-tetraoxaspiro[5,5]undeca ne, pentaerythritol tetrakis[3-(3,5-di-tert-butyl-4-hydroxyphenyl)propionate], thiodiethylene-bis[3-(3,5-di-tert-butyl-4-hydroxyphenyl) pro pionate], octadecyl-3-(3,5-di-tert-butyl-4-hydroxyphenyl) propionate, N,N'-hexane-1,6-diylbis[3-(3,5-di-tert-butyl-4-hydroxypheny l)propionamide], benzene propanoic acid, 3,5-bis(1,1-dimethylethyl)-4-hydroxy, C₇-C₉ alkyl ester, 2,4-dimethyl-6-(1-methylpentadecyl)phenol, diethyl[[3,5-bis (1,1-dimethylethyl)-4-hydroxyphenyl]methyl]phosphonate, 3,3',3",5,5',5"-hexa-tert-butyl-a,a',a"-(mesitylene-2,4,6-t olyl)tri-p-cresol, calcium diethyl bis[[3,5-bis(1,1-dimethylethyl)-4-hydroxyphenyl]methyl]phos phonate, 4,6-bis(octylthiomethyl)-o-cresol, ethylene bis(oxyethylene) bis[3-(5-tert-butyl-4-hydroxy-m-tolyl)propionate], hexamethylene bis[3-(3,5-di-tert-butyl-4-hydroxyphenyl)propionate, 1,3,5-tris(3,5-di-tert-butyl-4-hydroxybenzyl)-1,3,5-triazin e-2,4,6(1H,3H,5H)-trione, 1,3,5-tris[(4-tert-butyl-3-hydroxy-2,6-xylyl)methyl]-1,3,5-triazine-2,4,6(1H,3H,5H)-trione, a reaction product of N-phenylbenzenamine and 2,4,6-trimethylpentene, 2,6-di-tert-butyl-4-(4,6-bis(octylthio)-1,3,5-triazin-2-yla mino)phenol, picric acid, and citric acid; phosphorus compounds such as tris(2,4-di-tert-butylphenyl)phosphite, tris[2-[[2,4,8,10-tetra-tert-butyldibenzo[d,f][1,3,2]dioxap hosphepin-6-yl]oxy]ethyl]amine, bis(2,4-di-tert-butylphenyl) pentaerythritol diphosphite, bis[2,4-bis(1,1-dimethylethyl)-6-methylphenyl]ethyl ester phosphorous acid, tetrakis(2,4-di-tert-butylphenyl) [1,1-bisphenyl]-4,4'-diyl bisphosphonite, and 6-[3-(3-tert-butyl-4-hydroxy-5-methylphenyl)propoxy]-2,4,8, 10-tetra-tert-butyldibenz[d,f][1,3,2]dioxaphosphepin; sulfur-based compounds such as dilauryl 3,3'-thiodipropionate, dimyristyl 3,3'-thiodipropionate, distearyl 3,3'-thiodipropionate, pentaerythrityl tetrakis(3-lauryl thiopropionate), and 2-mercaptobenzimidazole; amine-based compounds such as phenothiazine; lactone-based compounds; vitamin E-based compounds; and the like. Among them, a phenol-based compound is preferable.

In the present invention, a light stabilizer may be added. Examples of the light stabilizer include: hindered amine-based compounds such as bis(2,2,6,6-tetramethyl-4-piperidyl)sebacate, bis(1,2,2,6,6-pentamethyl-4-piperidyl)sebacate, 4-benzoyloxy-2,2,6,6-tetramethylpiperidine, 1-[2-[3-(3,5-di-tert-butyl-4-hydroxyphenyl)propionyloxy]eth yl]-4-[3-(3,5-di-tert-butyl-4-hydroxyphenyl)propionyloxy]-2 ,2,6,6-tetramethylpiperidine, 1,2,2,6,6-pentamethyl-4-piperidinyl-methacrylate, bis(1,2,2,6,6-pentamethyl-4-piperidinyl) [[3,5-bis(1,1-dimet hylethyl)-4-hydroxyphenyl]methyl]butyl malonate, decane diacid bis(2,2,6,6-tetramethyl-1(octyloxy)-4-piperidinyl)ester, a reaction product of 1,1-dimethylethyl hydroperoxide with octane, N,N',N",N"'-tetrakis-(4,6-bis-(butyl-(N-methyl-2,2,6,6-tetr amethylpiperidine-4-yl)amino)-triazine-2-yl)-4,7-diazadecan e-1,10-diamine, a polycondensate of dibutylamine·1,3,5-triazine-N,N'-bis(2,2,6,6-tetramethyl-4-piperidyl-1,6-hexamethylenediamine with N-(2,2,6,6-tetramethyl-4-piperidyl)butylamine, poly[[6-(1,1,3,3-tetramethylbutyl)amino-1,3,5-triazine-2,4-diyl][(2,2,6,6-tetramethyl-4-piperidyl)imino]hexamethylene[ (2,2,6,6-tetramethyl-4-piperidyl)imino]], a polymer of dimethyl succinate with an ethanol of 4-hydroxy-2,2,6,6-tetramethyl-1-piperidine, 2,2,4,4-tetramethyl-20-(β-lauryloxycarbonyl)ethyl-7-oxa-3,2 0-diazadispiro[5,1,11,2] heneicosan-21-one, β-alanine N-(2,2,6,6-tetramethyl-4-piperidinyl)-dodecyl ester/tetradecyl ester, N-acetyl-3-dodecyl-1-(2,2,6,6-tetramethyl-4-piperidinyl)pyr rolidine-2,5-dione, 2,2,4,4-tetramethyl-7-oxa-3,20-diazadispiro[5,1,11,2]heneic osan-21-one, 2,2,4,4-tetramethyl-21-oxa-3,20-diazabicyclo-[5,1,11,2]-hen eicosan-20-propanoic acid-dodecyl ester/tetradecyl ester, propanedioic acid,[(4-methoxyphenyl)-methylene]-bis(1,2,2,6,6-pentamethy 1-4-piperidinyl)ester, a higher fatty acid ester of 2,2,6,6-tetramethyl-4-piperidinol, and 1,3-benzenedicarboxyamide,N,N'-bis(2,2,6,6-tetramethyl-4-pi peridinyl); benzophenone-based compounds such as octabenzone; benzotriazole-based compounds such as 2-(2H-benzotriazole-2-yl)-4-(1,1,3,3-tetramethylbutyl)pheno 1,2-(2-hydroxy-5-methylphenyl)benzotriazole, 2-[2-hydroxy-3-(3,4,5,6-tetrahydrophthalimide-methyl)-5-met hylphenyl]benzotriazole, 2-(3-tert-butyl-2-hydroxy-5-methylphenyl)-5-chlorobenzotria zole, 2-(2-hydroxy-3,5-di-tert-pentylphenyl)benzotriazole, a reaction product of methyl 3-(3-(2H-benzotriazole-2-yl)-5-tert-butyl-4-hydroxyphenyl)p ropionate with polyethylene glycol, and 2-(2H-benzotriazole-2-yl)-6-dodecyl-4-methylphenol; benzoate-based compounds such as 2,4-di-tert-butylphenyl-3,5-di-tert-butyl-4-hydroxybenzoate ; triazine-based compounds such as 2-(4,6-diphenyl-1,3,5-triazine-2-yl)-5-[(hexyl)oxy]phenol; and the like. A hindered amine-based compound is particularly preferable.

In the present invention, a tackifier may be added. As the tackifier, there are 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, methacryloxyoctyltrimethoxysilane, vinyltrimethoxysilane, vinyltrichlorosilane, vinyltriethoxysilane, Vinyl-tris(β-methoxyethoxy)silane, γ-chloropropyltrimethoxysilane, β-(3,4-epoxycyclohexyl)ethyltrimethoxysilane, γ-glycidoxypropyltrimethoxysilane, γ-mercaptopropyltrimethoxysilane, γ-aminopropyltriethoxysilane, N-β-(aminoethyl)-γ-aminopropyltrimethoxysilane, N-β-(aminoethyl)-γ-aminopropylmethyldimethoxysilane, γ-ureidopropyltriethoxysilane, hydroxyethyl methacrylate phosphate ester, methacryloxyoxyethyl acid phosphate, a half salt of methacryloxyoxyethyl acid phosphate monoethylamine, and 2-hydroxyethyl methacrylic acid phosphate; and the like. Among them, a hydroxyethyl methacrylate phosphate ester, methacryloxyoxyethyl acid phosphate, a half salt of methacryloxyoxyethyl acid phosphate monoethylamine, a 2-hydroxyethyl methacrylic acid phosphate, or the like is preferable. The content of the tackifier is preferably 0.05 to 30 parts by mass and more preferably 0.2 to 10 parts by mass relative to 100 parts by mass of the (A) ingredient.

The photocurable sealing agent for a fuel cell of the present invention can be produced by a publicly known conventional method. For example, the production can be carried out by preparing a mixture of predetermined amounts of the (A) to (C) ingredients and an additional optional ingredient (s), and mixing the mixture by using mixing means such as a mixer preferably at temperature of 10 to 70°C, more preferably at 20 to 50°C, and particularly preferably at normal temperature (25°C) for preferably 0.1 to 5 hours, more preferably 30 minutes to 3 hours, and particularly preferably about 60 minutes.

### <Application Method>

As a method for applying the photocurable sealing agent for a fuel cell of the present invention to an adherend, a publicly known method for a sealing agent or an adhesive is used. For example, it is possible to use methods such as dispensing using an automatic coater, spraying, inkjet, screen printing, gravure printing, dipping, and spin coating. The photocurable sealing agent for a fuel cell of the present invention is preferably liquid at 25°C from the viewpoint of easiness in application.

### <Curing Method>

A light source for curing the photocurable sealing agent for a fuel cell of the present invention by irradiation with light of active energy rays as described above, for example, ultraviolet rays, visible rays, and the like is not particularly limited, and examples thereof include a low pressure mercury lamp, a medium pressure mercury lamp, a high pressure mercury lamp, an extra high pressure mercury lamp, a black light lamp, a microwave excited mercury lamp, a metal halide lamp, a sodium lamp, a halogen lamp, a xenon lamp, an LED, a fluorescent lamp, sunlight, an electron beam irradiation device, and the like. As for an irradiation dose of light irradiation, a total dose is preferably 10 kJ/m² or more and more preferably 15 kJ/m² or more from the viewpoint of the properties of a cured product.

### <Cured Product>

A cured product of the present invention can be obtained by curing the photocurable resin composition of the present invention in the foregoing curing method by irradiation with active energy rays such as ultraviolet rays. A cured product of the present invention may be any product obtained by curing the photocurable resin composition of the present invention regardless of a curing method employed.

### <Usage and Sealing agent>

Since the photocurable sealing agent of the present invention or the cured product thereof is a rubber elastic body being excellent in low gas permeability, low moisture permeability, heat resistance, acid resistance, and flexibility, specific usages of the sealing agents of the present invention include stacked bodies for fuel cells, solar cells, dye-sensitized solar cells, lithium ion batteries, electrolytic capacitors, liquid crystal displays, organic EL displays, electronic paper, LEDs, hard disk devices, photodiodes, optical communication/circuits, electric wires/cables/optical fibers, optical isolators, IC cards, and the like; sensors; substrates; pharmaceutical and medical instruments and equipment; and the like. Among these usages, the usage as fuel cells is particularly preferable because the photocurable sealing agent of the present invention can be quickly cured by irradiation with active energy rays such as ultraviolet rays, and is excellent in the adhesion to an electrolyte membrane having properties difficult to bond.

### <Fuel Cell>

The fuel cell is a power generator that extracts electric power by chemically reacting hydrogen with oxygen. Here, as for fuel cells, there are four types including a solid polymer fuel cell, a phosphoric acid fuel cell, a molten carbonate fuel cell, and a solid oxide fuel cell. Among them, the solid polymer fuel cell achieves high power generation efficiency while having a relatively low operating temperature (around 80°C), and therefore is used for applications such as automotive power source, household power generator, small power source for electronic equipment such as a mobile phone, and emergency power supply.

As illustrated in Fig. 1, the cell 1 of the typical solid polymer fuel cell has the structure including: the electrolyte membrane electrode conjugant 5 (MEA) structured such that the polymer electrolyte membrane 4 is nipped between the air electrode 3a and the fuel electrode 3b; the frame 6 supporting the MEA; and the separators 2 in which the gas flow paths are formed. In order to activate the solid polymer fuel cell, a fuel gas (hydrogen gas) and an oxidation gas (oxygen gas) are supplied through an oxidation gas flow path 8a and a fuel gas flow path 8b. Moreover, for the purpose of suppressing heat generation during power generation, cooling water flows through a cooling water flow path 9. Note that a package including several hundreds of such cells stacked one on another is referred to a cell stack 10 as illustrated in Fig. 2.

When the fuel gas (hydrogen gas) is supplied to the fuel electrode and the oxidation gas (oxygen gas) is supplied to the oxygen electrode (air electrode), the following reactions occur at the respective electrodes, and a reaction to generate water (H₂ + 1/2O₂ → H₂O) occurs as a whole . To be more specific, protons (H+) generated at the fuel electrode are diffused inside the solid polymer membrane to move to the oxygen electrode side, and water (H₂O) generated by reaction with the oxygen is discharged from the oxygen electrode side.
Fuel electrode (anode electrode) : H₂ → 2H⁺ + 2e⁻
Oxygen electrode (cathode electrode) : 1/2O₂ + 2H⁺ + 2e⁻ → H₂O

In order to activate the solid polymer fuel cell, it is necessary to supply the anode electrode with the fuel gas containing hydrogen and supply the cathode electrode with the oxidation gas containing oxygen in such a separated manner that these gases can be isolated from each other. This is because there is a risk of lowering the power generation efficiency, if one of the gases is mixed with the other gas due to insufficiency of the isolation. Against such a background, a sealing agent is used in many portions for the purpose of preventing leakage of the fuel gas, the oxygen gas and the like. Specifically, the sealing agent is used between adjacent separators, between a separator and a frame, between a frame and an electrolyte membrane or MEA, and so on.

As the polymer electrolyte membrane, there is a cation exchange membrane having ion conductivity, and a preferable one is made of a fluorine-based polymer having a sulfonic acid group or the like, because it is chemically stable and has high resistance under high-temperature operation. There are commercially available products such as Nafion (registered trademark) manufactured by DuPont, Flemion (registered trademark) manufactured by Asahi Kasei Corporation, Aciplex (registered trademark) manufactured by Asahi Glass Co., Ltd., and the like. Although a polymer electrolyte membrane generally has properties difficult to bond, use of the photocurable sealing agent for a fuel cell of the present invention makes it possible to bond the polymer electrolyte membrane.

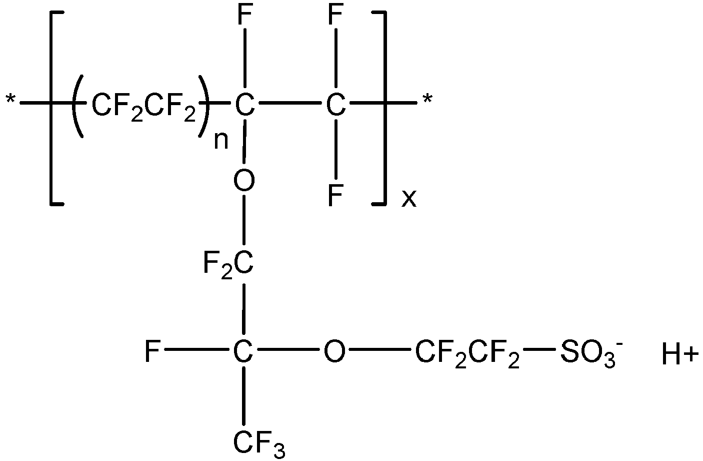

### Nafion (registered trademark)

The fuel electrode is called a hydrogen electrode or an anode, and a known electrode is used as the fuel electrode. For example, an electrode in which carbon carries a catalyst such as platinum, nickel, or ruthenium is used. Meanwhile, the air electrode is called an oxygen electrode or a cathode, and a known electrode is used as the air electrode. For example, an electrode in which carbon carries a catalyst such as platinum or an alloy is used. The surface of each electrode may be provided with a gas diffusion layer which functions to diffuse the gas or to moisturize the electrolyte. As the gas diffusion layer, a known layer is used, and examples thereof include carbon paper, carbon cloth, carbon fiber, and the like.

As illustrated in Fig. 1, each of the separators 2 is provided with finely-ribbed flow paths, through each of which a fuel gas or an oxidizing gas is supplied to the corresponding electrode. The separator is made of aluminum, stainless steel, titanium, graphite, carbon, or the like.

The frame supports and reinforces an electrolyte membrane or MEA, which is a thin membrane, so as not to break the electrolyte membrane or MEA. As a material for the frame, there are thermoplastic resins such as polyvinyl chloride, polyethylene naphthalate (PEN), polyethylene terephthalate (PET), polypropylene (PP), and polycarbonate. In addition, in order to bond members using the photocurable sealing agent for a fuel cell of the present invention or a cured product thereof, it is preferable that the members be light-transmissive. It is particularly preferable that adherends of the present invention be made of these PEN and PP.

The fuel cell of the present invention is characterized in that sealing is provided by the photocurable sealing agent for a fuel cell of the present invention or the cured product thereof. The members needed to be sealed in the fuel cell are the separators, the frame, the electrolyte, the fuel electrode, the air electrode, the MEA, and so on. More specifically, sealing is provided between the adjacent separators, between the separator and the frame, between the frame and the electrolyte membrane or MEA, and the like. Here, the main purpose of "sealing between the separator and the frame" or "between the polymer electrolyte membrane or the MEA and the frame" is to prevent mixing or leakage of the gases, and the sealing between the adjacent separators is provided in order to prevent leakage of the gas and to prevent leakage of the cooling water to the outside from the cooling water flow path. Since a strongly acidic atmosphere is formed by the acid generated from the electrolyte membrane, the sealing agent is required to have acid resistance.

### <Sealing Method>

A sealing method using the photocurable sealing agent for a fuel cell of the present invention is not particularly limited, and typical methods are FIPG (Form-in-Place Gasket), CIPG (Cure-in-Place Gasket), MIPG (Mold-in-Place Gasket), liquid injection molding, and the like.

FIPG is an adhesive sealing method involving: applying the photocurable sealing agent for a fuel cell of the present invention to a flange of a seal target component by an automatic coater or the like; and curing the photocurable sealing agent for a fuel cell, with the flange stuck on another flange, by irradiation with active energy rays such as ultraviolet rays from the light-transmissive flange side. More specifically, this is a method for sealing at least part of between at least two flanges of seal target components including the at least two flanges, at least one of which is a light-transmissive flange that allows active energy rays to pass therethrough, the method characterized by including the steps of: applying the foregoing photocurable sealing agent for a fuel cell to a surface of at least one of the flanges; sticking the one flange with the photocurable resin composition applied thereto onto the other flange with the photocurable sealing agent for a fuel cell interposed in between; and sealing the at least part of between the at least two flanges by curing the photocurable sealing agent for a fuel cell by irradiation with active energy rays through the light-transmissive flange.

CIPG is a method involving: applying the photocurable sealing agent for a fuel cell of the present invention in the form of a bead to a flange of a seal target component by an automatic coater or the like; forming a gasket by curing the photocurable sealing agent for a fuel cell by irradiation with active energy rays such as ultraviolet rays; and performing compression sealing with the flange stuck on another flange. More specifically, this is a method for sealing at least part of between at least two flanges of seal target components including the at least two flanges, the method characterized by including the steps of: applying the foregoing photocurable sealing agent for a fuel cell to a surface of at least one of the flanges; irradiating the applied photocurable sealing agent for a fuel cell with active energy rays to cure the photocurable sealing agent for a fuel cell, thereby forming a gasket composed of a cured product of the photocurable resin composition; placing the other flange on the gasket, and sealing the at least part of between the at least two flanges in such a way that the other flange and the one flange with the photocurable resin composition applied thereto are pressure bonded together with the gasket interposed in between.

MIPG is a method involving: placing a mold in pressure contact with a flange of a seal target component in advance; forming a gasket by injecting the photocurable sealing agent for a fuel cell into a cavity formed between the mold made of a light-transmissive material and the flange, and photocuring the photocurable sealing agent for a fuel cell by irradiation with the active energy rays such as ultraviolet rays; and performing compression sealing with the flange stuck on the other flange. Here, the mold is preferably made of a light-transmissive material, which is specifically glass, polymethylmethacrylate (PMMA), polycarbonate, cycloolefinpolymer, olefin, or the like. In addition, for easy demolding of the gasket from the mold after the formation of the gasket, it is preferable to apply a release agent such as a fluorine-based agent or a silicone-based agent. More specifically, this is a method for sealing at least part of between at least two flanges of seal target components including the at least two flanges, the method characterized by including the steps of: placing a gasket formation mold on at least one of the flanges; injecting the foregoing photocurable sealing agent for a fuel cell into at least part of a cavity formed between the gasket formation mold and the flange on which the mold is placed; irradiating the photocurable sealing agent for a fuel cell with the active energy rays to cure the photocurable sealing agent for a fuel cell, thereby forming a gasket composed of a cured product of the photocurable sealing agent for a fuel cell; detaching the mold from the one flange; and placing the other flange on the gasket and sealing the at least part of between the at least two flanges by pressure bonding the one flange and the other flange together with the gasket interposed in between.

The liquid injection molding is a method involving: forming a gasket by injecting the photocurable sealing agent for a fuel cell of the present invention with a predetermined pressure into a mold made of a light-transmissive material, and photocuring the photocurable sealing agent for a fuel cell by irradiation with active energy rays such as ultraviolet rays; and performing compression sealing with the flange stuck on the other flange. Here, the mold is preferably made of a light-transmissive material, which is specifically glass, PMMA, polycarbonate, cycloolefinpolymer, olefin, or the like. In addition, for easy demolding of the gasket from the mold after the formation of the gasket, it is preferable to apply a release agent such as a fluorine-based agent, a silicone-based agent, or the like.

### [Examples]

Hereinafter, the present invention will be described in details by taking Examples, but the present invention should not be limited to these Examples.

### <(A) Ingredient>

### <Production of a1> Production of Polyisobutylene Polymer (a1) having Acryloyloxyethoxy phenyl Group

After the inside of a 5 L separable flask was replaced with nitrogen, 200 mL of n-hexane and 2000 mL of butyl chloride were added, and then were cooled to -70°C while being stirred under a nitrogen atmosphere. Subsequently, 840 mL (9 mol) of isobutylene, 12 g (0.05 mol) of p-dicumyl chloride and 1.1 g (0.012 mol) of 2-methylpyridine were added. After the reaction mixture was cooled to -70°C, 5.0 mL (0.05 mol) of titanium tetrachloride was added to initiate polymerization. Three hours after the initiation of polymerization, 40 g of phenoxyethyl acrylate (LIGHT ACRYLATE PO-A, manufactured by kyoeisha Chemical Co., Ltd.) and 110 ml of titanium tetrachloride were added. After that, stirring was continued at -70°C for 4 hours, and then 1000 ml of methanol was added to stop the reaction.

The supernatant was fractionated from the reaction solution, and the solvent and so on were distilled off. After that, the product was dissolved in 3000 ml of n-hexane, was washed with 3000 ml of pure water three times, and was reprecipitated from the methanol. Thereafter, the solvent was distilled off under reduced pressure. The obtained polymer was vacuum-dried at 80°C for 24 hours to obtain a polyisobutylene polymer (a1) having an acryloyloxyethoxy phenyl group.

The polymer a1 contains -[CH₂C(CH₃)₂]- unit, and has two acryloyl groups. More specifically, a1 is a polyisobutylene polymer of the general formula (1) in which R¹ represents a phenylene group, PIB represents a polyisobutylene backbone, R⁴ represents a hydrocarbon group having 2 carbon atoms, R² and R³ each independently represent a hydrogen atom, R⁵ represents a hydrogen atom, and n is 2.

Here, the number average molecular weight of the ingredient a1 (by a calculation method in terms of standard polystyrene using size-exclusion chromatography (SEC)) was 11,100, and the viscosity of the ingredient a1 (the viscosity at 25°C measured using a cone-plate type viscometer) was 1550 Pa·s.

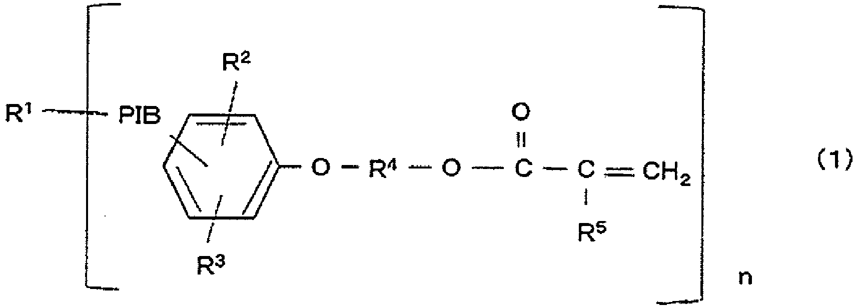

### <Preparation of Photocurable Sealing Agent for Fuel Cell>

### • Example 1

Example 1 as a photocurable sealing agent for a fuel cell was obtained by: adding 100 parts by mass of the polyisobutylene polymer (a1) having an acryloyloxyethoxy phenyl group as the component (A) of the present invention, 3 parts by mass of 2-hydroxy-2-methyl-1-phenyl-propane-1-one (IRGACURE 1173, manufactured by BASF SE) as the (B) ingredient, 50 parts by mass of dicyclopentanyl methacrylate (FA-513M, manufactured by Hitachi Chemical Co., Ltd.) as the (C) ingredient, and 3 parts by mass of 3-methacryloxypropyltrimethoxy silane (KBM503, manufactured by Shin-Etsu Chemical Co., Ltd.); and then mixing the mixture by using a planetary mixer for 60 minutes at normal temperature under a light-shielded condition. Here, Example 1 was liquid at 25°C.

### • Example 2

Example 2 was obtained in the same preparation method as in Example 1 except that isobornyl methacrylate (SR-423, manufactured by Sartomer) was used in place of the dicyclopentanyl methacrylate in Example 1. Example 2 was liquid at 25°C.

### • Example 3

Example 3 was obtained in the same preparation method as in Example 1 except that stearyl methacrylate (SMA, manufactured by MITSUBISHI GAS CHEMICAL COMPANY, INC.) was used in place of the dicyclopentanyl methacrylate in Example 1. Example 3 was liquid at 25°C.

### • Example 4

Example 4 was obtained in the same preparation method as in Example 1 except that 50 parts by mass of the dicyclopentanyl methacrylate in Example 1 was changed to 100 parts by mass.

### • Example 5

Example 4 was obtained in the same preparation method as in Example 1 except that 50 parts by mass of the dicyclopentanyl methacrylate in Example 1 was changed to 20 parts by mass.

### • Comparative Example 1

Comparative Example 1 was obtained in the same preparation method as in Example 1 except that dicyclopentanyl acrylate (FA-513AS, manufactured by Hitachi Chemical Co., Ltd.) was used in place of the dicyclopentanyl methacrylate in Example 1.

### • Comparative Example 2

Comparative Example 2 was obtained in the same preparation method as in Example 1 except that isobornyl acrylate (IBX-A, manufactured by Kyoeisha Chemical Co., Ltd.) was used in place of the dicyclopentanyl methacrylate in Example 1.

Test methods used in Examples and Comparative Examples in Table 1 are as follows.

### <Test for Adhesion to Electrolyte Membrane>

Each of the photocurable sealing agents for a fuel cell was applied with a thickness of 50 µm to a 400-µm polypropylene (PP) film, and an electrolyte membrane made of a fluoropolymer having a sulfonic acid group (Nafion (registered trademark) manufactured by DuPont) with a width of 10 mm × a length of 2 mm was stuck onto the photocurable sealing agent. Then, the photocurable sealing agent was cured by irradiation from the PP film side with ultraviolet rays for 20 seconds at a total dose of 45 kJ/m². In this way, a test piece was prepared. Next, using a tension testing machine, the cured product of the photocurable sealing agent for a fuel cell together with the PP film was peeled off from the electrolyte membrane by being pulled in a 180° direction at a rate of peeling of 10 mm/minute. The test result was evaluated based on the following criteria.

### [Evaluation Criteria]

### Peeling Adhesive Strength:

⊚ (Excellent): 0.2 N/mm or more
o (Good): 0.1 N/mm or more but less than 0.2 N/mm
× (Poor): less than 0.1 N/mm

### <Test for Adhesion to PEN>

Each of the photocurable sealing agents in Example 1 and Comparative Example 1 was applied with a thickness of 50 µm to a 400-µm PP film, and PEN with a width of 10 mm × a length of 2 mm was stuck onto the photocurable sealing agent. Then, the photocurable sealing agent was cured by irradiation from the PP film side with ultraviolet rays for 20 seconds at a total dose of 45 kJ/m². In this way, a test piece was prepared. Next, using the tension testing machine, the cured product of the photocurable sealing agent for a fuel cell together with the PP film was peeled off from the electrolyte membrane by being pulled in a 180° direction at a rate of peeling of 10 mm/minute. The test result was evaluated based on the following criteria.

### [Evaluation Criteria]

### Peeling Adhesive Strength:

⊚ (Excellent): 0.2 N/mm or more
o (Good): 0.1 N/mm or more but less than 0.2 N/mm
× (Poor): less than 0.1 N/mm

**[Table 1]**

| | Example 1 | Example 2 | Example 3 | Example 4 | Example 5 | Comp. Ex.1 | Comp. Ex.2 |
|---|---|---|---|---|---|---|---|
| Adhesion to Electrolyte Membrane | ⊚ | ⊚ | ○ | ⊚ | ○ | × | × |
| Adhesion to PEN | ⊚ | ⊚ | - | - | - | × | - |

Examples 1 to 5 in Table 1 demonstrate that the present invention enabled the photocurable sealing agent to be quickly cured by irradiation with active energy rays such as ultraviolet rays (for 20 seconds) and achieve excellent adhesion to an electrolyte membrane having properties difficult to bond. In addition, Example 1 also demonstrates excellent adhesion to PEN.

In addition, according to Table 1, Comparative Examples 1, 2 are compositions using the dicyclopentanyl acrylate and the isobornyl acrylate in place of the (C) ingredient of the present invention, and resulted in the poor adhesion to the electrolyte membrane. Moreover, Comparative Example 1 also demonstrates poor adhesion to PEN.

### • Comparative Example 3

Comparative Example 3 was obtained in the same preparation method as in Example 1 except that urethane dimethacrylate having a polybutadiene backbone (TE-2000, manufactured by Nippon Soda Co., Ltd.) was used in place of the (A) ingredient in Example 1.

### • Comparative Example 4

Comparative Example 4 was obtained in the same preparation method as in Example 1 except that urethane diacrylate having a polyether backbone (UXF-4002, manufactured by Nippon Kayaku Co., Ltd.) was used in place of the (A) ingredient in Example 1.

### <Moisture Permeability (Water Vapor Barrier Property)>

Each of the photocurable sealing agent for a fuel cells in Examples 1 and 2 and Comparative Examples 3 and 4 was poured into a frame with 200 mm × 200 mm × 0.2 mm, and then was irradiated with ultraviolet rays for 20 seconds by using an ultraviolet irradiator at a total dose of 45 kJ/m². In this way, a cured product in a sheet form with a thickness of 1.0 mm was formed. Then, 5 g of (anhydrous) calcium chloride was placed in an aluminum cup having an opening with a diameter of 30 mm, and the cured product was set in the cup. After the "initial total weight" (g) was measured, the cup was left for 24 hours in a thermo-hygrostat kept at an atmosphere temperature of 40°C and a relative humidity of 95%. Thereafter, the "total weight after leaving" (g) was measured, and the moisture permeability (g/m² · 24h) was calculated and evaluated based on the following evaluation criteria. Table 2 presents the results. The detailed test method conforms to JIS Z 0208. For use as a photocurable sealing agent for a fuel cell, the moisture permeability is preferably less than 5 g/m² · 24h.

### [Evaluation Criteria]

○: The moisture permeability is less than 5 g/m² · 24h.
△: The moisture permeability is 5 g/m² · 24h or more but less than 50 g/m² · 24h.
×: The moisture permeability is 50 g/m² · 24h or more.

### <Hydrogen Gas Barrier Property Test>

Measurement was conducted using the photocurable sealing agents for a fuel cell of Examples 1 and 2 and Comparative Examples 3 and 4 in accordance with JIS K 7126-1: 2006 (Plastics -Film and sheeting- Determination of gas-transmission rate -Part 1: Differential-pressure method) . The type of the test was a pressure sensor method, and the gas transmission rate was measured on a sheet with a thickness of 1 mm under the conditions at 23°C and with a test gas (hydrogen gas) on the high pressure side set to 100 kPa, and then was evaluated based on the following evaluation criteria. Table 2 presents the results. For use as a photocurable sealing agent for a fuel cell, the hydrogen gas barrier property is preferably less than 1 × 10⁻¹⁵ mol.m/m² · s · Pa.

### [Evaluation Criteria]

o (Good) : less than 1 × 10⁻¹⁵ mol · m/m² · s · Pa
× (Poor) : 1 × 10⁻¹⁵ mol · m/m² · s · Pa or more

**[Table 2]**

| | Example 1 | Example 2 | Comp. Ex.3 | Comp. Ex.4 |
|---|---|---|---|---|
| Moisture Permeability | ○ | ○ | Δ | × |
| Hydrogen Barrier Property | ○ | ○ | × | × |

Examples 1 and 2 in Table 2 demonstrate that the present invention satisfied the low moisture permeability and the hydrogen barrier property required for the photocurable sealing agents for a fuel cell, and thereby achieved favorable sealability. Meanwhile, Comparative Example 3 is a composition using the urethane dimethacrylate having the polybutadiene backbone in place of the (A) ingredient, and resulted in the poor hydrogen gas barrier property. Then, Comparative Example 4 is a composition using the urethane diacrylate having the polyether backbone in place of the (A) ingredient, and resulted in the poor moisture permeability and the poor hydrogen gas barrier property.

### Industrial Applicability

The photocurable sealing agent for a fuel cell of the present invention can be cured quickly by irradiation with active energy rays such as ultraviolet rays, and is excellent in the adhesion to an electrolyte membrane, PP, and PEN having properties difficult to bond.

Other modes of the present invention may be as follows. [21]

A photocurable sealing agent for a fuel cell containing the following (A) to (C) ingredients:
(A) ingredient: a polymer having a polyisobutylene backbone containing a -[CH2C(CH3)2]- unit, the polymer having 2 to 4 (meth)acryloyl groups per molecule;
(B) ingredient: a photo-radical polymerization initiator; and
(C) ingredient: a methacrylate monomer. The (C) ingredient is a methacrylate monomer having an alkyl group having 5 to 30 carbon atoms or a methacrylate monomer having an alicyclic group having 5 to 30 carbon atoms.

[22] The photocurable sealing agent for a fuel cell according to the [21], wherein
   the methacrylate monomer having an alkyl group having 5 to 30 carbon atoms as the (C) ingredient is at least one selected from the group consisting of heptyl methacrylate, 2-ethylhexyl methacrylate, octyl methacrylate, isooctyl methacrylate, decyl methacrylate, dodecyl methacrylate, isodecyl methacrylate, lauryl methacrylate, n-octadecyl methacrylate, isooctadecyl methacrylate, nonadecane methacrylate, 3-heptyldecyl-1-methacrylate, and stearyl methacrylate, or
   the methacrylate monomer having an alicyclic group is at least one selected from the group consisting of cyclohexyl methacrylate, 4-butylcyclohexyl methacrylate, dicyclopentanyl methacrylate, dicyclopentenyl methacrylate, dicyclopentenyloxy methacrylate, isobornyl methacrylate, adamantyl methacrylate, dicyclopentenyl dimethacrylate, and tricyclodecane dimethanol dimethacrylate.
[23] The photocurable sealing agent for a fuel cell according to any one of the [21] to [22], wherein a content of the (C) ingredient is 3 to 300 parts by mass relative to 100 parts by mass of the (A) ingredient.
[24] The photocurable sealing agent for a fuel cell according to any one of the [21] to [23], wherein the (A) ingredient is a polyisobutylene polymer represented by a general formula (1) : 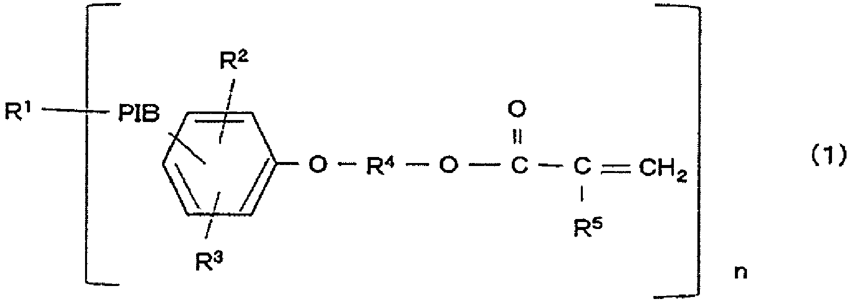 wherein R¹ represents a monovalent or polyvalent aromatic hydrocarbon group or a monovalent or polyvalent aliphatic hydrocarbon group, PIB represents a polyisobutylene backbone containing a -[CH₂C(CH₃)₂]- unit, R⁴ represents a divalent hydrocarbon group having 2 to 6 carbon atoms and optionally containing an oxygen atom, R² and R³ each represent a hydrogen atom or a monovalent hydrocarbon group having 1 to 20 carbon atoms, R⁵ represents a hydrogen atom, a methyl group, an ethyl group, or a propyl group, and n is any integer of 1 to 6.
[25] Use of the photocurable sealing agent for a fuel cell according to any one of the [21] to [24] as a sealing agent for a periphery of any member selected from the group consisting of a separator, a frame, an electrolyte, a fuel electrode, an air electrode, and an MEA which are members constituting a fuel cell
[26] Use of the photocurable sealing agent for a fuel cell according to any one of the [21] to [24] as a sealing agent between adjacent separators in a fuel cell, a sealing agent between a separator and a frame in the fuel cell, or a sealing agent between a frame and an electrolyte membrane or MEA in the fuel cell.
[27] Use of the photocurable sealing agent for a fuel cell according to the [25] or [26], wherein the fuel cell is a solid polymer fuel cell.
[28] A fuel cell, wherein the photocurable sealing agent for a fuel cell according to any one of the [21] to [24] is used for a seal between adjacent separators in the fuel, a seal between a separator and a frame in the fuel, or a seal between a frame and an electrolyte membrane or MEA in the fuel.
[29] The fuel cell according to the [28], wherein the fuel cell is a solid polymer fuel cell.
[30] A sealing method, comprising:
   applying the photocurable sealing agent for a fuel cell according to any one of the [21] to [24] to a flange of a seal target component; and
irradiating the flange and another flange, which are stuck on each other, with active energy rays from a light-transmissive flange side, thereby curing the photocurable sealing agent for a fuel cell to seal the flanges, wherein
   at least one of the flange of the seal target component and the other flange is light-transmissive.
[31] A sealing method comprising:
   forming a gasket by applying the photocurable sealing agent for a fuel cell according to any one of the [21] to [24] to a flange of a seal target component, and curing the photocurable sealing agent for a fuel cell by irradiation with active energy rays; and
   thereafter sticking the flange to another flange and compression sealing the flanges.
[32] A sealing method comprising:
   placing a mold in pressure contact with a flange of a seal target component in advance;
   forming a gasket by injecting the photocurable sealing agent for a fuel cell according to any one of the [21] to [24] into a cavity formed between the mold and the flange, and photocuring the photocurable sealing agent for a fuel cell by irradiation with the active energy rays; and
   thereafter sticking the flange to another flange and sealing the flanges.

### Reference Signs List

- 1: cell in solid polymer fuel cell
- 2: separator
- 3a: air electrode (cathode)
- 3b: fuel electrode (anode)
- 4: polymer electrolyte membrane
- 5: electrolyte membrane electrode conjugant (MEA)
- 6: frame
- 7: adhesive or sealing agent
- 8a: oxidation gas flow path
- 8b: fuel gas flow path
- 9: cooling water flow path
- 10: cell stack
- 11: solid polymer fuel cell

## Claims

1. A photocurable sealing agent for a fuel cell comprising the following (A) to (C) ingredients:
(A) ingredient: a polymer having a polyisobutylene backbone containing a -[CH₂C(CH₃)₂]- unit, the polymer having 2 to 4 (meth)acryloyl groups per molecule;
(B) ingredient: a photo-radical polymerization initiator; and
(C) ingredient: a methacrylate monomer, **characterized in that**
the (C) ingredient is a methacrylate monomer having an alkyl group having 5 to 30 carbon atoms or a methacrylate monomer having an alicyclic group having 5 to 30 carbon atoms.

2. The photocurable sealing agent for a fuel cell according to claim 1, wherein
the (C) ingredient is a methacrylate monomer having an alkyl group having 5 to 30 carbon atoms, and
the methacrylate monomer having an alkyl group is at least one selected from the group consisting of heptyl methacrylate, 2-ethylhexyl methacrylate, octyl methacrylate, isooctyl methacrylate, decyl methacrylate, dodecyl methacrylate, isodecyl methacrylate, lauryl methacrylate, n-octadecyl methacrylate, isooctadecyl methacrylate, nonadecane methacrylate, 3-heptyldecyl-1-methacrylate, and stearyl methacrylate, or
the (C) ingredient is a methacrylate monomer having an alicyclic group having 5 to 30 carbon atoms,
the methacrylate monomer having an alicyclic group is at least one selected from the group consisting of cyclohexyl methacrylate, 4-butylcyclohexyl methacrylate, dicyclopentanyl methacrylate, dicyclopentenyl methacrylate, dicyclopentenyloxy methacrylate, isobornyl methacrylate, adamantyl methacrylate, dicyclopentenyl dimethacrylate, and tricyclodecane dimethanol dimethacrylate.

3. The photocurable sealing agent for a fuel cell according to claim 1 or 2, wherein a content of the (C) ingredient is 3 to 300 parts by mass relative to 100 parts by mass of the (A) ingredient.

4. The photocurable sealing agent for a fuel cell according to any one of claims 1 to 3, wherein the (A) ingredient is a polyisobutylene polymer represented by a general formula (1): 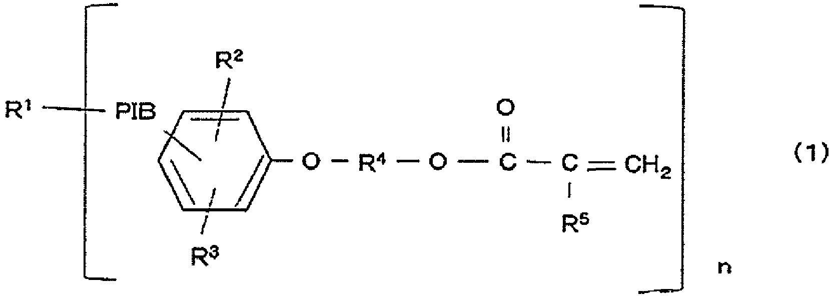 wherein R¹ represents a monovalent or polyvalent aromatic hydrocarbon group or a monovalent or polyvalent aliphatic hydrocarbon group, PIB represents a polyisobutylene backbone containing a -[CH₂C(CH₃)₂]- unit, R⁴ represents a divalent hydrocarbon group having 2 to 6 carbon atoms and optionally containing an oxygen atom, R² and R³ each independently represent a hydrogen atom or a monovalent hydrocarbon group having 1 to 20 carbon atoms, R⁵ represents a hydrogen atom, a methyl group, an ethyl group, or a propyl group, and n is any integer of 2 to 4.

5. Use of the photocurable sealing agent for a fuel cell according to any one of claims 1 to 4 as a sealing agent for a periphery of any member selected from the group consisting of a separator, a frame, an electrolyte, a fuel electrode, an air electrode, and an electrolyte membrane electrode conjugant which are members constituting a fuel cell.

6. Use of the photocurable sealing agent for a fuel cell according to any one of claims 1 to 4 as a sealing agent between adjacent separators in a fuel cell, a sealing agent between a separator and a frame in the fuel cell, or a sealing agent between a frame and an electrolyte membrane or an electrolyte membrane electrode conjugant in the fuel cell.

7. Use of the photocurable sealing agent according to claim 5 or 6, wherein the fuel cell is a solid polymer fuel cell.

8. A cured product obtained by photocuring the photocurable sealing agent for a fuel cell according to any one of claims 1 to 4.

9. A fuel cell comprising any seal selected from the group consisting of a seal between adjacent separators in the fuel cell, a seal between a separator and a frame in the fuel cell, and a seal between a frame and an electrolyte membrane or an electrolyte membrane electrode conjugant in the fuel cell, wherein
any one of the seals contains the cured product according to claim 8.

10. The fuel cell according to claim 9, wherein the fuel cell is a solid polymer fuel cell.

11. A method for sealing at least part of between at least two flanges of seal target components including the at least two flanges, at least one of which is a light-transmissive flange that allows active energy rays to pass therethrough, the method comprising the steps of:
applying the photocurable sealing agent for a fuel cell according to any one of claims 1 to 4 to a surface of at least one of the flanges;
sticking the one flange with the photocurable resin composition applied thereto onto the other flange with the photocurable sealing agent for a fuel cell interposed in between; and
sealing the at least part of between the at least two flanges by curing the photocurable sealing agent for a fuel cell by irradiation with active energy rays through the light-transmissive flange.

12. A method for sealing at least part of between at least two flanges of seal target components including the at least two flanges, comprising the steps of:
applying the photocurable sealing agent for a fuel cell according to any one of claims 1 to 4 to at least one of the flanges;
irradiating the applied photocurable sealing agent for a fuel cell with active energy rays to cure the photocurable sealing agent for a fuel cell, thereby forming a gasket composed of a cured product of the photocurable resin composition;
placing the other flange on the gasket, and sealing the at least part of between the at least two flanges in such a way that the other flange and the one flange with the photocurable resin composition applied thereto are pressure bonded together with the gasket interposed in between.

13. A method for sealing at least part of between at least two flanges of seal target components including the at least two flanges, comprising the steps of:
placing a gasket formation mold on at least one of the flanges;
injecting the photocurable sealing agent for a fuel cell according to any one of claims 1 to 4 into at least part of a cavity formed between the gasket formation mold and the flange on which the mold is placed;
irradiating the photocurable sealing agent for a fuel cell with the active energy rays to cure the photocurable sealing agent for a fuel cell, thereby forming a gasket composed of a cured product of the photocurable sealing agent for a fuel cell;
detaching the mold from the one flange; and
sealing the at least part of between the at least two flanges by placing the other flange on the gasket and then pressure bonding the one and the other flanges together with the gasket interposed in between.

## Patentansprüche

1. Lichthärtbares Dichtmittel für eine Brennstoffzelle, welches die folgenden Bestandteile (A) bis (C) enthält:
Bestandteil (A): ein Polymer mit einer eine -[CH₂C(CH₃)₂]-Einheit enthaltenden Polyisobutylen-Hauptkette, wobei das Polymer 2 bis 4 (Meth)acryloylgruppen pro Molekül besitzt;
Bestandteil (B): ein photo-radikalischer Polymerisationsinitiator; und
Bestandteil (C): ein Methacrylatmonomer, **dadurch gekennzeichnet, dass**
der Bestandteil (C) ein Methacrylatmonomer mit einer Alkylgruppe mit 5 bis 30 Kohlenstoffatomen oder ein Methacrylatmonomer mit einer alicyclischen Gruppe mit 5 bis 30 Kohlenstoffatomen ist.

2. Lichthärtbares Dichtmittel für eine Brennstoffzelle nach Anspruch 1, wobei
der Bestandteil (C) ein Methacrylatmonomer mit einer Alkylgruppe mit 5 bis 30 Kohlenstoffatomen ist, und
das Methacrylatmonomer mit einer Alkylgruppe wenigstens eines, ausgewählt aus der Gruppe bestehend aus Heptylmethacrylat, 2-Ethylhexylmethacrylat, Octylmethacrylat, Isooctylmethacrylat, Decylmethacrylat, Dodecylmethacrylat, Isodecylmethacrylat, Laurylmethacrylat, n-Octadecylmethacrylat, Isooctadecylmethacrylat, Nonadecanmethacrylat, 3-Heptyldecyl-1-methacrylat und Stearylmethacrylat ist, oder
der Bestandteil (C) ein Methacrylatmonomer mit einer alicyclischen Gruppe mit 5 bis 30 Kohlenstoffatomen ist,
wobei das Methacrylatmonomer mit einer alicyclischen Gruppe wenigstens eines, ausgewählt aus der Gruppe bestehend aus Cyclohexylmethacrylat, 4-Butylcyclohexylmethacrylat, Dicyclopentanylmethacrylat, Dicyclopentenylmethacrylat, Dicyclopentenyloxymethacrylat, Isobornylmethacrylat, Adamantylmethacrylat, Dicyclopentenyldimethacrylat und Tricyclodecandimethanoldimethacrylat ist.

3. Lichthärtbares Dichtmittel für eine Brennstoffzelle nach Anspruch 1 oder 2, wobei ein Gehalt des Bestandteils (C) 3 bis 300 Massenteile bezogen auf 100 Massenteile des Bestandteils (A) beträgt.

4. Lichthärtbares Dichtmittel für eine Brennstoffzelle nach einem der Ansprüche 1 bis 3, wobei der Bestandteil (A) ein durch eine allgemeine Formel (1) dargestelltes Polyisobutylenpolymer ist: 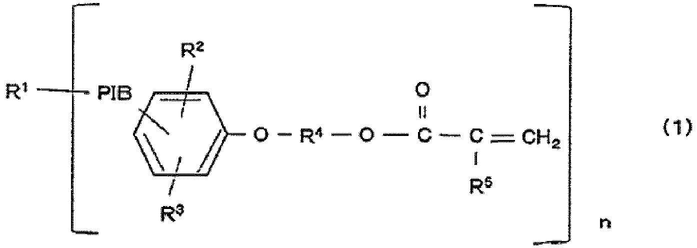 wobei R¹ eine einwertige oder mehrwertige aromatische Kohlenwasserstoffgruppe oder eine einwertige oder mehrwertige aliphatische Kohlenwasserstoffgruppe darstellt, PIB eine eine -[CH₂C(CH₃)₂]-Einheit enthaltende Polyisobutylen-Hauptkette darstellt, R⁴ eine zweiwertige Kohlenwasserstoffgruppe mit 2 bis 6 Kohlenstoffatomen und einem optional enthaltenen Sauerstoffatom darstellt, R² und R³ jeweils unabhängig voneinander ein Wasserstoffatom oder eine einwertige Kohlenwasserstoffgruppe mit 1 bis 20 Kohlenstoffatomen darstellen, R⁵ ein Wasserstoffatom, eine Methylgruppe, eine Ethylgruppe oder eine Propylgruppe darstellt und n irgendeine ganze Zahl von 2 bis 4 ist.

5. Verwendung des lichthärtbaren Dichtmittels für eine Brennstoffzelle nach einem der Ansprüche 1 bis 4 als Dichtmittel für eine Peripherie eines Elements aus der Gruppe bestehend aus einem Separator, einem Rahmen, einem Elektrolyten, einer Brennstoffelektrode, einer Luftelektrode und einem Elektrolytmembran-Elektrodenconjugat, welche die die Brennstoffzelle bildenden Elemente sind.

6. Verwendung des lichthärtbaren Dichtmittels für eine Brennstoffzelle nach einem der Ansprüche 1 bis 4 als Dichtmittel zwischen benachbarten Separatoren in einer Brennstoffzelle, als Dichtmittel zwischen einem Separator und einem Rahmen in der Brennstoffzelle oder als Dichtmittel zwischen einem Rahmen und einer Elektrolytmembran oder einem Elektrolytmembran-Elektrodenconjugat in der Brennstoffzelle.

7. Verwendung des lichthärtbaren Dichtmittels nach Anspruch 5 oder 6, wobei die Brennstoffzelle eine Festpolymer-Brennstoffzelle ist.

8. Ausgehärtetes Produkt, erhalten durch Lichthärten des lichthärtbaren Dichtmittels für eine Brennstoffzelle nach einem der Ansprüche 1 bis 4.

9. Brennstoffzelle mit einer Dichtung aus der Gruppe bestehend aus einer Dichtung zwischen benachbarten Separatoren in der Brennstoffzelle, einer Dichtung zwischen einem Separator und einem Rahmen in der Brennstoffzelle und einer Dichtung zwischen einem Rahmen und einer Elektrolytmembran oder einem Elektrolytmembran-Elektrodenconjugat in der Brennstoffzelle, wobei jede der Dichtungen das ausgehärtete Produkt gemäß Anspruch 8 enthält.

10. Brennstoffzelle nach Anspruch 9, wobei die Brennstoffzelle eine Festpolymer-Brennstoffzelle ist.

11. Verfahren zum Abdichten wenigstens eines Teils zwischen wenigstens zwei Flanschen von abzudichtenden Komponenten, die die wenigstens zwei Flansche umfassen, von denen wenigstens einer ein lichtdurchlässiger Flansch ist, der für Aktivenergiestrahlen durchlässig ist, wobei das Verfahren die folgenden Schritte umfasst:
Auftragen des lichthärtbaren Dichtmittels für eine Brennstoffzelle nach einem der Ansprüche 1 bis 4 auf eine Oberfläche wenigstens eines der Flansche;
Kleben des einen Flansches mit der darauf aufgetragenen lichthärtbaren Harzzusammensetzung auf den anderen Flansch, wobei das lichthärtbare Dichtmittel für eine Brennstoffzelle dazwischen angeordnet ist; und
Abdichten des wenigstens einen Teils zwischen den wenigstens zwei Flanschen durch Aushärten des lichthärtbaren Dichtmittels für eine Brennstoffzelle durch Bestrahlung mit Aktivenergiestrahlen durch den lichtdurchlässigen Flansch hindurch.

12. Verfahren zum Abdichten wenigstens eines Teils zwischen wenigstens zwei Flanschen von abzudichtenden Komponenten, die die wenigstens zwei Flansche umfassen, wobei das Verfahren die folgenden Schritte umfasst:
Auftragen des lichthärtbaren Dichtmittels für eine Brennstoffzelle nach einem der Ansprüche 1 bis 4 auf wenigstens einen der Flansche;
Bestrahlen des aufgetragenen lichthärtbaren Dichtmittels für eine Brennstoffzelle mit Aktivenergiestrahlen, um das lichthärtbare Dichtmittel für eine Brennstoffzelle auszuhärten, wodurch eine Dichtung gebildet wird, die aus einem ausgehärteten Produkt der lichthärtbaren Harzzusammensetzung zusammengesetzt ist;
Anordnen des anderen Flansches auf der Dichtung und Abdichten wenigstens des Teils zwischen den wenigstens zwei Flanschen so, dass der andere Flansch und der eine Flansch mit der darauf aufgetragenen lichthärtbaren Harzzusammensetzung mit der dazwischen angeordneten Dichtung druckverbunden werden.

13. Verfahren zum Abdichten wenigstens eines Teils zwischen wenigstens zwei Flanschen von abzudichtenden Komponenten, die die wenigstens zwei Flansche umfassen, wobei das Verfahren die folgenden Schritte umfasst:
Anordnen einer Dichtungsausbildungsform auf wenigstens einen der Flansche;
Einspritzen des lichthärtbaren Dichtmittels für eine Brennstoffzelle nach einem der Ansprüche 1 bis 4 in wenigstens einen Teil eines Hohlraums zwischen der Dichtungsausbildungsform und dem Flansch, auf welchem die Form angeordnet ist;
Bestrahlen des lichthärtbaren Dichtmittels für eine Brennstoffzelle mit Aktivenergiestrahlen, um das lichthärtbare Dichtmittel für eine Brennstoffzelle auszuhärten, wodurch eine Dichtung geformt wird, die aus einem ausgehärteten Produkt des lichthärtbaren Dichtmittels für eine Brennstoffzelle zusammengesetzt ist;
Trennen der Form von dem einen Flansch; und
Abdichten wenigstens des Teils zwischen den wenigstens zwei Flanschen durch Anordnen des anderen Flansches auf der Dichtung und anschließendes Druckverbinden des einen und des anderen Flansches mit der dazwischen angeordneten Dichtung.

## Revendications

1. Agent d'étanchéité photodurcissable pour une pile à combustible comprenant les ingrédients (A) à (C) suivants :
ingrédient (A) : un polymère ayant un squelette polyisobutylène contenant une unité -[CH₂C(CH₃)₂]-, le polymère ayant de 2 à 4 groupes (méth)acryloyle par molécule ;
ingrédient (B): un initiateur de polymérisation photoradicalaire ; et
ingrédient (C) : un monomère de méthacrylate, **caractérisé en ce que**
l'ingrédient (C) est un monomère de méthacrylate ayant un groupe alkyle ayant de 5 à 30 atomes de carbone ou un monomère de méthacrylate ayant un groupe alicyclique ayant de 5 à 30 atomes de carbone.

2. Agent d'étanchéité photodurcissable pour une pile à combustible selon la revendication 1, dans lequel
l'ingrédient (C) est un monomère de méthacrylate ayant un groupe alkyle ayant de 5 à 30 atomes de carbone, et
le monomère de méthacrylate ayant un groupe alkyle est au moins un choisi dans le groupe consistant en méthacrylate d'heptyle, méthacrylate de 2-éthylhexyle, méthacrylate d'octyle, méthacrylate d'isooctyle, méthacrylate de décyle, méthacrylate de dodécyle, méthacrylate d'isodécyle, méthacrylate de lauryle, méthacrylate de n-octadécyle, méthacrylate d'isooctadécyle, méthacrylate de nonadécane, 3-heptyldécyl-1-méthacrylate, et méthacrylate de stéaryle, ou
l'ingrédient (C) est un monomère de méthacrylate ayant un groupe alicyclique ayant de 5 à 30 atomes de carbone,
le monomère de méthacrylate ayant un groupe alicyclique est au moins un choisi dans le groupe consistant en méthacrylate de cyclohexyle, méthacrylate de 4-butylcyclohexyle, méthacrylate de dicyclopentanyle, méthacrylate de dicyclopentényle, méthacrylate de dicyclopentényloxy, méthacrylate d'isobornyle, méthacrylate d'adamantyle, diméthacrylate de dicyclopentényle, et diméthacrylate de tricyclodécane diméthanol.

3. Agent d'étanchéité photodurcissable pour une pile à combustible selon la revendication 1 ou 2, dans lequel une teneur de l'ingrédient (C) est de 3 à 300 parties en masse par rapport à 100 parties en masse de l'ingrédient (A).

4. Agent d'étanchéité photodurcissable pour une pile à combustible selon l'une quelconque des revendications 1 à 3, dans lequel l'ingrédient (A) est un polymère de polyisobutylène représenté par une formule générale (1) : 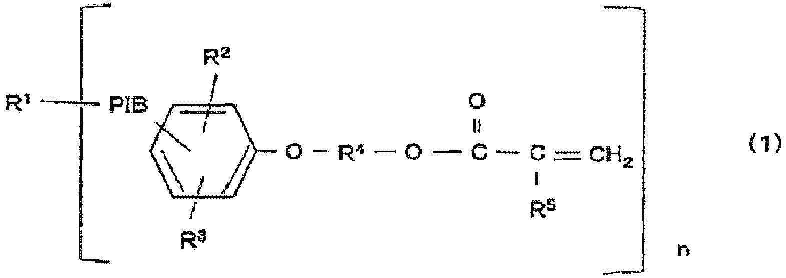 dans laquelle R¹ représente un groupe hydrocarboné aromatique monovalent ou polyvalent ou un groupe hydrocarboné aliphatique monovalent ou polyvalent, PIB représente un squelette polyisobutylène contenant une unité -[CH₂C(CH₃)₂]-, R⁴ représente un groupe hydrocarboné divalent ayant de 2 à 6 atomes de carbone et contenant éventuellement un atome d'oxygène, R² et R³ représentent chacun indépendamment un atome d'hydrogène ou un groupe hydrocarboné monovalent ayant de 1 à 20 atomes de carbone, R⁵ représente un atome d'hydrogène, un groupe méthyle, un groupe éthyle, ou un groupe propyle, et n est un nombre entier de 2 à 4.

5. Utilisation de l'agent d'étanchéité photodurcissable pour une pile à combustible selon l'une quelconque des revendications 1 à 4 comme un agent d'étanchéité pour une périphérie d'un élément choisi dans le groupe consistant en un séparateur, un cadre, un électrolyte, une électrode à combustible, une électrode à air, et un combiné électrolyte membrane électrode qui sont des éléments constituant une pile à combustible.

6. Utilisation de l'agent d'étanchéité photodurcissable pour une pile à combustible selon l'une quelconque des revendications 1 à 4 comme un agent d'étanchéité entre des séparateurs adjacents dans une pile à combustible, un agent d'étanchéité entre un séparateur et un cadre dans la pile à combustible, ou un agent d'étanchéité entre un cadre et une membrane d'électrolyte ou un combiné électrolyte membrane électrode dans la pile à combustible.

7. Utilisation de l'agent d'étanchéité photodurcissable selon l'une des revendications 5 à 6, dans laquelle la pile à combustible est une pile à combustible polymère solide.

8. Produit durci obtenu par photodurcissement de l'agent d'étanchéité photodurcissable pour une pile à combustible selon l'une quelconque des revendications 1 à 4

9. Pile à combustible comprenant une étanchéité choisie dans le groupe consistant en une étanchéité entre des séparateurs adjacents dans la pile à combustible, une étanchéité entre un séparateur et un cadre dans la pile à combustible, et une étanchéité entre un cadre et une membrane d'électrolyte ou un combiné électrolyte membrane électrode dans la pile à combustible, dans laquelle
l'une quelconque des étanchéités contient le produit durci selon la revendication 8.

10. Pile à combustible selon la revendication 9, dans laquelle la pile à combustible est une pile à combustible polymère solide.

11. Procédé pour rendre étanche au moins une partie entre au moins deux brides de composants à objectif d'étanchéité incluant les au moins deux brides, dont au moins une est une bride transmettant la lumière qui permet à des rayons d'énergie active de passer à travers celle-ci, le procédé comprenant les étapes consistant à :
appliquer l'agent d'étanchéité photodurcissable pour une pile à combustible selon l'une quelconque des revendications 1 à 4 sur une surface d'au moins une des brides ;
coller la une bride avec la composition de résine photodurcissable appliquée sur son dessus sur l'autre bride avec l'agent d'étanchéité photodurcissable pour une pile à combustible intercalée entre celles-ci ; et
rendre étanche la au moins une partie entre les au moins deux brides par durcissement de l'agent d'étanchéité photodurcissable pour une pile à combustible par irradiation avec des rayons d'énergie active à travers la bride transmettant la lumière.

12. Procédé pour rendre étanche au moins une partie entre au moins deux brides de composants à objectif d'étanchéité incluant les au moins deux brides, comprenant les étapes consistant à :
appliquer l'agent d'étanchéité photodurcissable pour une pile à combustible selon l'une quelconque des revendications 1 à 4 sur au moins une des brides ;
irradier l'agent d'étanchéité photodurcissable appliqué pour une pile à combustible avec des rayons d'énergie active pour faire durcir l'agent d'étanchéité photodurcissable pour une pile à combustible, formant par là un joint constitué d'un produit durci de la composition de résine photodurcissable ;
disposer l'autre bride sur le joint, et rendre étanche la au moins une partie entre les au moins deux brides de telle manière que l'autre bride et la une bride avec la composition de résine photodurcissable appliquée sur son dessus sont liées par pression avec le joint intercalé entre celles-ci.

13. Procédé pour rendre étanche au moins une partie entre au moins deux brides de composants à objectif d'étanchéité incluant les au moins deux brides, comprenant les étapes consistant à :
disposer un moule de formation de joint sur au moins une des brides ;
injecter l'agent d'étanchéité photodurcissable pour une pile à combustible selon l'une quelconque des revendications 1 à 4 dans au moins une partie d'une cavité formée entre le moule de formation de joint et la bride sur laquelle le moule est placé ;
irradier l'agent d'étanchéité photodurcissable pour une pile à combustible avec les rayons d'énergie active pour faire durcir l'agent d'étanchéité photodurcissable pour une pile à combustible, formant par là un joint constitué d'un produit durci de l'agent d'étanchéité photodurcissable pour une pile à combustible ;
détacher le moule de la une bride ; et
rendre étanche la au moins une partie entre les au moins deux brides en disposant l'autre bride sur le joint et puis en liant par pression la une et l'autre bride ensemble avec le joint intercalé entre celles-ci.
